(19) Europäisches Patentamt
European Patent Office
Office européen des brevets

(11) EP 3 353 253 B1

(12) **FASCICULE DE BREVET EUROPEEN**

(45) Date de publication et mention de la délivrance du brevet:
**15.01.2020 Bulletin 2020/03**

(21) Numéro de dépôt: **16785546.9**

(22) Date de dépôt: **22.09.2016**

(51) Int Cl.:
***C09D 183/04*** (2006.01) ***D06M 15/65*** (2006.01)
***B60R 21/235*** (2006.01)

(86) Numéro de dépôt international:
**PCT/FR2016/000146**

(87) Numéro de publication internationale:
**WO 2017/051085 (30.03.2017 Gazette 2017/13)**

(54) **COMPOSITION SILICONE ET PROCEDE UTILES POUR AMELIORER LA RESISTANCE AU FROISSEMENT ET A L'ABRASION DE SACS GONFLABLES, DESTINES A LA PROTECTION D'UN OCCUPANT DE VEHICULE**

SILIKONZUSAMMENSETZUNG UND VERFAHREN ZUR VERBESSERUNG DER KNITTER- UND ABRIEBFESTIGKEIT VON AIRBAGS ZUM SCHUTZ VON FAHRZEUGINSASSEN

SILICONE COMPOSITION AND PROCESS USEFUL FOR IMPROVING THE CREASE RESISTANCE AND ABRASION RESISTANCE OF AIRBAGS, INTENDED FOR PROTECTING A VEHICLE OCCUPANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2015 FR 1501993**

(43) Date de publication de la demande:
**01.08.2018 Bulletin 2018/31**

(73) Titulaire: **ELKEM SILICONES France SAS**
**69003 Lyon (FR)**

(72) Inventeurs:
- **BORECKI, Karine**
**01390 Civrieux (FR)**
- **SEGGIO, Anne**
**69003 LYON (FR)**
- **DJIAN, Damien**
**69740 Genas (FR)**
- **BORDES, Bertrand**
**69006 Lyon (FR)**

(74) Mandataire: **Mekki, Boualem et al**
**Elkem Silicones France SAS**
**Industrial Property Department**
**55, rue des Frères Perret**
**69192 Saint Fons (FR)**

(56) Documents cités:
**US-A- 5 789 084**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 353 253 B1

## Description

Le domaine général de l'invention est celui des compositions silicones d'enduction, en particulier celles du type bicomposant ou multicomposant, réticulables par des réactions de polyaddition ou d'hydrosilylation pour produire un support enduit par un élastomère silicone en couche mince. Ces compositions silicones lorsqu'elles sont réticulées sont adaptées, entre autres comme revêtement, par exemple de protection ou de renfort mécanique de différents substrats en matière textile comme par exemple des supports fibreux, tissés, tricotés ou non tissés.

De tels revêtements en silicone sont généralement obtenus par enduction du substrat puis durcissement découlant de la polyaddition des groupements insaturés (alcényles, e.g. Si-Vi) d'un organopolysiloxane sur des fonctions hydrogénosilyles du même ou d'un autre organopolysiloxane.

Ces compositions silicones ont trouvé un débouché important dans le revêtement des matériaux souples, tissés, tricotés ou non tissés, utilisés pour la fabrication de sacs de protection individuelle d'occupant de véhicules, dénommés également "airbag". La présente invention concerne aussi l'utilisation de ces compositions silicones dans la fabrication de tels sacs de protection.

Historiquement, ces derniers sont formés par une toile en fibre synthétique, par exemple en polyamide (Nylon®), recouverte sur au moins l'une de ces faces d'une couche d'un élastomère du type chloroprène. La présence d'une telle couche ou d'un tel revêtement de protection est dictée par le fait que les gaz libérés par le générateur de gaz (par exemple : monoxyde de carbone, NOx) en cas de choc, sont extrêmement chauds et contiennent des particules incandescentes susceptibles d'endommager le sac en Nylon®. La couche de protection interne en élastomère doit être résistante aux hautes températures et aux contraintes mécaniques. Il importe également que ce revêtement élastomère se présente sous la forme d'un film fin, uniforme et parfaitement adhérent au support en tissu synthétique, formant les parois de "l'airbag".

Les compositions silicones ont aisément supplanté les chloroprènes dans cette application, car il s'est avéré que ces derniers ne répondent pas de façon satisfaisante à toutes les spécifications susvisées.

L'utilisation de générateurs de gaz plus agressifs mécaniquement et thermiquement entraîne des contraintes supplémentaires au niveau des coutures de l'airbag. Celles-ci s'additionnent aux contraintes physiques liées au déploiement du sac gonflable et peuvent produire un arrachement du tissu enduit d'élastomère et l'ouverture de ces coutures. Il en résulte un point d'échappement de gaz chaud, émanant du générateur, à travers les coutures engendrant des points de faiblesse à l'origine de déchirures, de peignages (effilochages) ou voir même de rupture de certains airbags. C'est ainsi que les fabricants d'airbags sont toujours à la recherche de compositions silicones précurseurs d'élastomères silicones utiles pour enduire des supports fibreux tissés, tricotés ou non tissés et qui présentent une excellente adhésion sur le support après réticulation et lui confèrent des propriétés mécaniques optimales, notamment une bonne résistance à l'abrasion, au froissement, à la déchirure et au peignage (aptitude du support enduit à résister au peignage des coutures du sac gonflable).

Par le terme « non-tissé », on entend toute structure constituée de matières textiles, comme des fibres, des filaments continus ou des fils coupés, quelle qu'en soit la nature ou l'origine, formée en voile par un moyen quelconque, et liée par tout moyen, excluant l'entrelacement de fils. Les textiles non-tissés sont des produits ayant l'apparence de textiles, poreux, composés principalement de fibres et sont fabriqués par des procédés autres que la filature, le tissage, le tricotage ou le nouage.

Une autre contrainte qui s'impose au revêtement élastomère est celle de la tenue au vieillissement, i.e. de la préservation dans le temps des propriétés thermiques, mécaniques et d'adhésion. Cette contrainte est d'autant plus aïgue que les sacs de protection individuelle sont stockés sous forme pliée dans les véhicules automobiles, avant leur éventuelle expansion salvatrice en cas d'accident.

Cependant, des nouvelles contraintes émergent actuellement et nécessitent de nouvelles solutions. D'une part, la durabilité des airbags doit être garantie dans des circonstances où les contraintes sont plus défavorables. Ainsi, il est demandé de fournir des compositions silicones d'enduction qui garantissent que les airbags obtenus présentent une excellente résistance à l'abrasion même sous des conditions climatiques sévères qui sont simulées par un vieillissement à haute température et sous une humidité élevée par exemple à 80°C et sous 95% d'humidité relative.

D'autre part, les procédés de fabrication de tissus pour la fabrication d'airbags à partir de fibres synthétiques telles que les polyamides ou les polyesters décrites dans la demande de brevet EP-617881, comprennent différentes opérations qui sont la préparation du mélange de fibres, la filature et le tissage suivi de différents traitements tels que le lavage, le séchage et la fixation thermique du tissu. Lors de la préparation du mélange de fibres et de la filature on utilise couramment des huiles ou des produits d'ensimage pour faciliter le glissement des fibres et des fils. Avant ou pendant l'étape de tissage, il est souvent réalisé sur le fil un traitement d'encollage pour assurer la cohésion des fibres et former une gaine de protection du fil pour réaliser des tissus sans défaut d'aspect et évitant au maximum les casses et éraillures. D'autres agents lubrifiants sont régulièrement employés lors du tissage pour une lubrification efficace des aiguilles et des éléments mécaniques des métiers à tisser et par conséquent le fil entraîné par les aiguilles va véhiculer une partie du lubrifiant qui sera contenu dans le tissu. C'est entre autres pour éliminer ces huiles ou produits d'ensimage,

d'encollage et les agents lubrifiants qu'une ou plusieurs étapes de lavage sont réalisées après l'étape de tissage une fois que le tissu est « tombé du métier » selon la terminologie employée par les tisseurs. A cette étape de lavage, suit une étape de séchage de tissu qui est souvent réalisée en même temps qu'une étape de traitement thermique aussi appelée « thermofixation ». Il est connu que dans les usines de tissage les étapes de lavage visant à éliminer ces huiles ou produits d'ensimage, d'encollage et les agents lubrifiants conduisent à des effluents aqueux polluants qui se retrouvent dans les rejets aqueux. Il y a par conséquent un enjeu environmental à pouvoir utiliser des tissus obtenus directement après tissage aussi connus sous le nom de « tombés de métier », « écru » ou « loomstate » en anglais qui n'ont pas subi après tissage ni d'étape de lavage ou « scouring » en anglais ni d'étape de traitement thermique ou « thermofixation » pour la fabrication d'airbags. Il est connu, comme décrit dans la demande de brevet WO 2007/065885 que la présence de ces huiles ou produits d'ensimage, d'encollage et les agents lubrifiants peut diminuer les performances d'adhésion du revêtement silicone sur le tissu et par conséquent être néfaste dans le domaine des sacs de sécurité gonflable ou « airbags ». Il importe que le revêtement élastomère silicone qui se présente sous la forme d'un film fin et uniforme soit parfaitement adhérent au support fibreux tissé ou tricoté n'ayant pas subi après tissage d'étape de lavage ou de thermofixation.

Il y a donc un besoin continu d'améliorer l'adhésion de l'élastomère silicone sur tous les types de support fibreux tissés ou tricotés et notamment sur les supports fibreux tissés ou tricotés qui n'ont pas subi après tissage d'étape de lavage ni d'étape de thermofixation. Cette adhésion doit se maintenir dans la durée et cela même dans des conditions de température et d'humidité élevées.

Les promoteurs d'ahésion employés dans les compositions silicones utilisés pour l'airbag ont largement été étudiés et différentes solutions sont connues de l'homme du métier.

Ainsi le brevet US-5,877,256 décrit l'utilisation d'un composé organosilicié comprenant des motifs époxy comme promoteur d'adhésion. Ces composés organosiliciés peuvent être des silanes ou des siloxanes et contenir également d'autres groupes fonctionnels choisis parmi les groupes alkoxy, SiH et Si-vinyl. Le brevet US-5,789,084 décrit l'utilisation d'un promoteur d'adhésion comprenant les composés organosiliciés décrit dans le brevet US-5,877,256 suscité et un composé organique du titane. La demande de brevet EP-0681014 décrit l'utilisation d'un promoteur d'adhésion constitué d'un composé organosilicié comprenant des motifs époxy, d'un composé organique du titane et d'un silane avec des motifs alkoxy. Plus récemment, la demande de brevet EP 1623063 décrit l'utilisation comme promoteur d'adhéesion d'un mélange comprenant un silane avec des fonctions alkoxy et époxy, du titanate de butyle et un organopolysiloxane ayant des motifs vinyle dans la chaîne et des bouts de chaîne diméthylhydroxysilyl. Le brevet US-7,153,583 divulgue un système promoteur d'ahérence comprenant un composé organosilicié comprenant des groupes (méth)acryloxy.

Il y a toujours un besoin de compositions silicones d'enduction pour produire un revêtement élastomère silicone en couche mince sur un matériau souple, tissé, tricoté ou non-tissé utilisé pour la fabrication de sacs de protection individuelle d'occupant de véhicules, dénommés également "airbag", qui présente des performances d'adhésion suffisantes pour être utilisée de façon satisfaisante sur des tissus obtenu directement après tissage et n'ayant pas subi d'étape de lavage ni de thermofixation. Ces compositions élastomères silicones d'enduction doivent en même temps présenter des propriétés mécaniques optimales, notamment une bonne résistance à la déchirure et au peignage (aptitude du tissu enduit à résister au peignage des coutures du sac gonflable).

Des solutions ont été envisagées par exemple dans la demande de brevet WO 2007/065885 ou dans le brevet US-7,581,568 mais elles restent spécifiques à certains types de tissus ou de métiers à tisser. Il n'y a pas aujourd'hui de solution technique satisfaisante permettant d'utiliser des support fibreux tissés ou tricotés, n'ayant pas subi après tissage d'étape de lavage ou d'étape de thermofixation, dans l'application airbag.

La présente invention a pour objectif de fournir une composition élastomère silicone d'enduction, réticulable par des réactions de polyaddition, utile notamment pour des applications dans le domaine des sacs gonflables de sécurité pour véhicules, ou airbags, présentant après réticulation des propriétés optimales en matière d'adhésion, de minceur, de légèreté et de résistance au froissement et à l'abrasion, mais aussi de bonnes propriétés mécaniques. Cette composition silicone d'enduction doit être également facile à mettre en oeuvre et à appliquer.

Un autre des objectifs de l'invention est de fournir un procédé pour améliorer la résistance à l'abrasion d'un support fibreux tissé, tricoté ou non tissé. Cette résistance à l'abrasion doit être optimale même dans des conditions environnementales difficiles c'est-à-dire lorsque le support fibreux enduit est soumis à des conditions de température et d'humidite élevées.

Un autre des objectifs essentiel de l'invention est de fournir un procédé pour améliorer la résistance à l'abrasion d'un support fibreux tissé ou tricoté obtenu directement en sortie du métier de tissage et n'ayant pas subi d'étape de lavage destinée à éliminer les compositions lubrifiantes ou d'ensimage utilisées pendant le tissage, ni d'étape de thermofixation.

L'invention concerne également un support fibreux tissé, tricoté ou non tissé, utilisé pour la fabrication de sacs de protection individuelle d'occupant de véhicules, dénommés également "airbag" ainsi que le procédé d'obtention de ces supports fibreux tissés, tricotés ou non tissés

Ces supports fibrés obtenus par le procédé selon l'invention sont utilisés pour la fabrication des sacs gonflables

de sécurité pour véhicules, ou airbags, présentant non seulement des propriétés optimales en matière d'adhésion, de minceur, de légèreté et de résistance au froissement et à l'abrasion mais aussi de bonnes propriétés de résistance au peignage et à la déchirure.

Un autre objet de l'invention est un support fibreux enduit avec la composition silicone sus-mentionnée ou obtenu selon le procédé ci-dessus.

Et, un dernier objet de l'invention est un sac gonflable de sécurité comprenant le support fibreux tissé ou tricoté enduit avec la composition silicone sus-mentionnée.

Ces objectifs parmi d'autres, sont atteints par l'invention qui consiste en une composition silicone **A** comprenant une base silicone **B** susceptible de réticuler ou durcir par polyaddition et caractérisée en ce qu'elle comprend un système promoteur d'adhésion **D** comprenant au moins un composé organique du titane **M** et au moins un additif **X** qui est un organopolysiloxane linéaire comprenant des motifs siloxyles **(I.1)** à **(I.3)** de formules suivantes:

- $$Y_a Z^1_b SiO_{\frac{4-(a+b)}{2}} \quad \textbf{(I.1)}$$

- $$Z^2_3 SiO_{\frac{1}{2}} \quad \textbf{(I.2)}$$

- $$H_d Z^3_e SiO_{\frac{4-(d+e)}{2}} \quad \textbf{(I.3)}$$

et ne comprenant pas de motifs de formule (I.4):

- $$Z^2_2 SiO_{\frac{2}{2}} \quad \textbf{(I.4)}$$

dans lesquelles

- a=1 et b=1 ou 2
- d=1 et e=1 ou 2
- le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi les radicaux constitués par le groupe : alkylglycidyléther, époxyalkyle linéaire, ramifié ou cyclique, époxyalcényle linéaire, ramifié ou cyclique et glycidyl-ester d'acide carboxylique,
- les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle,, xylyle, tolyle et phényle,

avec la condition selon laquelle l'additif **X** comprend, par molécule, au moins deux motifs siloxyles **(I.1)** porteur de groupes hydrocarbonés époxyfonctionnels et au moins trois motifs siloxyles **(I.3)** porteurs de groupes hydrogénosiloxyles.

Après de nombreux essais la Demanderesse a pu mettre en évidence que l'utilisation dans la composition silicone **A** d'un système promoteur d'adhésion **D** comprenant au moins un composé organique du titane **M** et un **additif X** tel que défini ci-dessus permet d'obtenir une excellente résistance à l'abrasion et au froissement du support fibreux enduit avec cette composition A.

L'additif **X** possède au moins trois liaisons Si-H et joue le rôle de promoteur d'adhésion et de réticulant. Cet organopolysiloxane est défini par des critères bien spécifiques. C'est un organopolysiloxane linéaire et dont tous les motifs siloxyles dans la chaîne sont fonctionnalisés soit par un motif Si-H (**I-3**) soit par un motif Si-epoxy (**I-2**).

De préférence, l'additif **X** ne contient pas de groupes fonctionnels alkoxy, vinyl, hydroxy ou méthacryloxy.

Avantageusement, l'additif **X** a un nombre total de motifs siloxyles compris entre 7 et 30, de préférence compris entre 7 et 25 et encore plus préférentiellement compris entre 7 et 15.

C'est le choix de l'additif **X** en combinaison avec le composé organique du titane **M** comme système promoteur d'adhésion dans la composition **A** qui permet d'obtenir les bonnes propriétés souhaitées sur les support fibreux enduits.

De plus, l'amélioration de la résistance à l'abrasion et au froissement ne se fait pas au détriment des autres

propriétés nécessaires que sont la dureté, la résistance mécanique, l'uniformité de surface, et la résistance à la chaleur du revêtement silicone.

Un autre avantage de la composition **A** selon l'invention est qu'elle peut être utilisée pour enduire des supports fibreux tissus ou tricotés obtenus directement en sortie du métier de tissage et n'ayant pas subi d'étape de lavage destinée à éliminer les compositions lubrifiantes ou d'ensimage utilisées pendant le tissage, ni d'étape de thermofixation.

Conformément à une disposition préférée de l'invention, l'additif **X** a un ratio molaire entre les motifs siloxyles **(I.1)** et les motifs siloxyles **(I.3)** compris entre 0,5 et 4, de préférence compris entre 0,8 et 3 et encore plus préférentiellement compris entre 0,8 et 2,5.

Selon un mode préférentiel, l'additif **X** est constitué de motifs siloxyles choisis parmi les motifs siloxyle **(I.1)** à **(I.3)** de formules suivantes:

- $$Y_a Z^1_b SiO_{\frac{4-(a+b)}{2}} \quad \textbf{(I.1)}$$
- $$Z^2_3 SiO_{\frac{1}{2}} \quad \textbf{(I.2)}$$
- $$H_d Z^3_e SiO_{\frac{4-(d+e)}{2}} \quad \textbf{(I.3)}$$

dans lesquelles

- a=1 et b=1 ou 2
- d=1 et e=1 ou 2, et
- les symboles Y, $Z^1$, $Z^2$ et $Z^3$ sont tels que définis ci-dessus.

Selon un autre mode préférentiel, l'additif **X** est constitué de motifs siloxyles choisis parmi les motifs siloxyles **(I.1)** à **(I.3)** de formules suivantes:

- $$Y_a Z^1_b SiO_{\frac{4-(a+b)}{2}} \quad \textbf{(I.1)}$$
- $$Z^2_3 SiO_{\frac{1}{2}} \quad \textbf{(I.2)}$$
- $$H_d Z^3_e SiO_{\frac{4-(d+e)}{2}} \quad \textbf{(I.3)}$$

dans lesquelles

- a=1 et b=1 ou 2,
- d=1 et e=1, et
- les symboles Y, $Z^1$, $Z^2$ et $Z^3$ sont tels que définis ci-dessus.

L'additif **X** peut être obtenu par hydrosilylation de synthons organiques comprenant au moins un cycle hydrocarboné dans lequel est inclus un atome d'oxygène par un organopolyhydrogénosiloxane linéaire ne comprenant pas de motifs (**I.4**) tels que décrits précédemment. Ces réactions d'hydrosilylation peuvent être catalysées par le platine, notamment par du platine supporté sur charbon comme décrit dans le brevet EP 0904315 ou par des complexes de platine avec des ligands carbène comme décrit dans le brevet EP 1309647. De préférence, le catalyseur utilisé sera un complexe de platine avec des ligands carbène car la réaction d'hydrosilylation est mieux maîtrisée et la stabilité au stockage de l'additif **X** obtenu est améliorée.

De préférence, l'additif **X** a une teneur en motifs siloxyles **(I.1)** supérieure ou égale à 0,25 mol pour 100 g

d'additif **X** et plus préférentiellement comprise entre 0,25 et 0,45 mol/100g d'additif **X.**

Encore plus avantageusement l'additif **X** a une teneur en motifs siloxyles **(I.1)** supérieure ou égale à 0,25 mol pour 100 g d'additif **X** et une teneur en motifs siloxyles **(I.3)** supérieure ou égale à 0,3 mol pour 100 g d'additif **X.**

Selon un mode encore plus avantageux, l'additif **X** a une teneur en motifs siloxyles **(I.1)** comprise entre 0,25 et 0,45 mol/100g d'additif **X** et une teneur en motifs siloxyles **(I.3)** comprise entre 0,3 et 0,85 mol/100g d'additif **X.**

De préférence la teneur en additif **X** dans la composition **A** selon l'invention est comprise entre 4 et 10% poids de la composition **A** et encore plus préférentiellement entre 5 et 9%.

De préférence, pour le motif siloxyle **(I.1)** le symbole Y est choisi parmi le groupe constitué par les groupes hydrocarbonés (**R-1**) à (**R-6**) de formules suivantes :

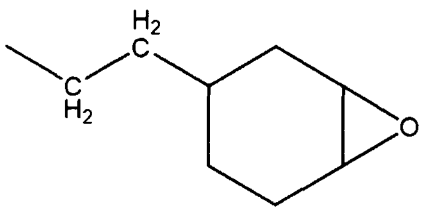

**(R-1)**

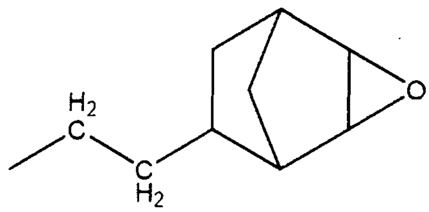

**(R-2)**

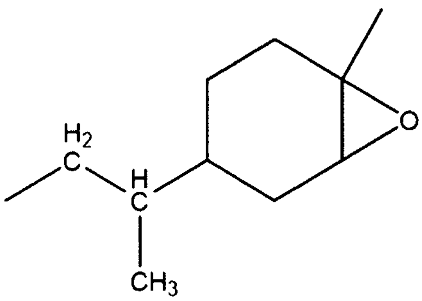

**(R-3)**

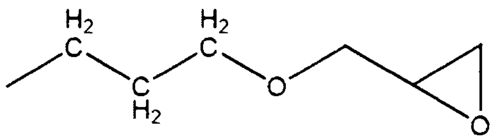

**(R-4)**

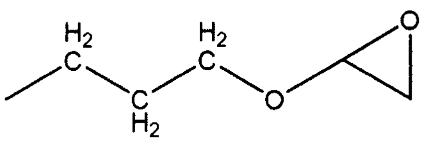

**(R-5)**

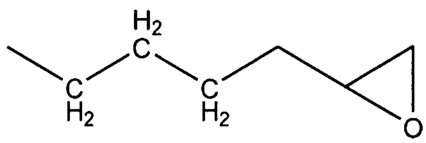

**(R-6)**

Selon un mode de réalisation particulièrement préféré, dans le motif siloxyle **(I.1)** le symbole Y est le groupe hydrocarboné (**R-4**) de formule suivante :

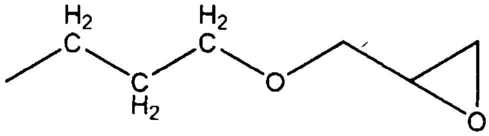

**(R-4)**

Concernant, l'autre constituant du système promoteur d'adhésion **D,** le composé organique du titane **M** est un chélate de titane ou un alcoxyde métallique de formule $Ti(OR)_4$ où R est choisi parmi les groupes alkyles linéaires ou ramifiés en $C_1$-$C_8$, les groupes alkoxyalkyl ou les groupes acyles .

De préférence, le composé organique du titane M est choisi parmi les alkylates de titane comme le titanate de butyle,

le titanate d'isopropyle, le titanate de méthyle et le titanate d'octyle. Plus préférentiellement, le composé organique du titane **M** est le titanate de butyle.

La teneur en composé organique du titane **M** dans la composition silicone **A** selon l'invention peut être comprise entre 0,2 et 1,5 % poids de la compositon **A,** de préférence entre 0,4 et 1%.

Selon un autre mode de réalisation, le système promoteur d'adhésion **D** de la composition **A** comprend en outre un organosilane **G** comprenant au moins un radical époxy.

De préférence, l'organosilane **G** est choisi parmi les produits répondant à la formule générale (VII) suivante :

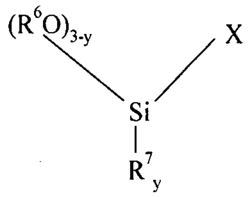

**(VII)**

formule dans laquelle :

- $R^6$ est un radical alkyle linéaire ou ramifié en $C_1$-$C_4$,
- $R^7$ est un radical alkyle linéaire ou ramifié en $C_1$-$C_4$
- y est égal à 0, 1, 2 ou 3, et
- X étant défini par la formule **(VIII)** suivante :

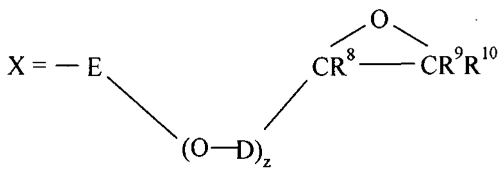

**(VIII)**

avec :

- E et D qui sont des radicaux identiques ou différents choisis parmi les alkyles en $C_1$-$C_4$ linéaires ou ramifiés,
- z est égal à 0 ou 1,
- $R^8$, $R^9$, $R^{10}$ qui sont des radicaux identiques ou différents représentant l'hydrogène ou un radical alkyle linéaire ou ramifié en $C_1$-$C_4$, et
- $R^8$ et $R^9$ ou $R^{10}$ pouvant alternativement constituer ensemble et avec les deux carbones porteurs de l'époxy, un cycle alkyle ayant de 5 à 7 chaînons,

Selon un mode de réalisation spécialement préféré l'organosilane **G** est choisi parmi le groupe constitué par : le 3-glycidoxypropyltriméthoxysilane (GLYMO), le 3-glycidoxypropyltriéthoxysilane (C1770), le 3-glycidoxypropylméthyldiméthoxysilane ; le 3-glycidoxypropylméthyldiéthoxysilane, le 3-glycidoxypropyldiméthyléthoxysilane, le 2-(3,4-époxycyclohexyl)éthyltriéthoxysilane, le 2-(3,4-epoxycyclohexyl)éthyltriméthoxysilane , le 3,4-époxycyclohexyléthyltriméthoxysilane, le 5,6-epoxyhexyltriéthoxysilane et leurs mélanges.

S'il est présent dans la composition **A,** une teneur de 0,5 à 3% poids d'organosilane **G** dans la composition **A** peut être avantageusement utilisée.

Conformément à une disposition préférée de l'invention, la concentration en motifs époxy dans la composition **A** est comprise entre 10 et 60 mmol pour 100g de composition **A** et de préférence comprise entre 15 et 40 mmol pour 100g de composition **A.**

Pour faire varier la concentration en motifs époxy dans la composition **A** il est possible de faire varier la concentration en additif **X** dans la composition **A,** de faire varier le nombre de motifs **(I.1)** de l'additif **X** ou d'ajouter une quantité variable d'organosilane **G.**

De préférence, la base silicone **B** comprend :

- au moins un organopolysiloxane **E** présentant, par molécule, au moins deux groupes alcényles en $C_2$-$C_{12}$ liés chacun à un atome de silicium différent,
- au moins une résine organopolysiloxane **F** comprenant de 0,1 à 20% en poids de groupes alcényles en $C_2$-$C_6$ liés chacun à un atome de silicium différent,

- éventuellement au moins un organohydrogénopolysiloxane **H** présentant, par molécule, au moins deux atomes d'hydrogène liés chacun à un atome de silicium différent, et de préférence au moins trois atomes d'hydrogène liés chacun à un atome de silicium différent,
- une quantité efficace d'un catalyseur **C** de polyaddition qui est un métal ou composé métallique du groupe du platine,
- au moins un inhibiteur **I,** et
- éventuellement au moins une charge **J.**

Selon un mode de réalisation préférentiel base silicone **B** comprend au moins une charge **J.**

Pour l'ensemble de la demande, et selon la dénomination largement connue dans la chimie des silicones les motifs siloxyle MDTQ représentent :

- M = motif siloxyle de formule $R_3SiO_{1/2}$
- D = motif siloxyle de formule $R_2SiO_{2/2}$
- T = motif siloxyle de formule $RSiO_{3/2}$ et
- Q = motif siloxyle de formule $SiO_{4/2}$,

où les radicaux R, identiques ou différents, sont des groupements monovalents.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Selon un mode de réalisation préféré, l'organopolysiloxane **E** comprend :

(i) au moins deux motifs de formule (E1) :

$$Y_aZ_bSiO_{(4-(a+b)/2} \qquad (E1)$$

dans laquelle :

- Y représente un radical monovalent contenant de 2 à 12 atomes de carbone, ayant au moins une fonction alcène,
- Z représente un radical monovalent contenant de 1 à 20 atomes de carbone et ne comprend pas de fonction alcène;
- a et b représentent des nombres entiers, a valant 1, 2 ou 3, b valant 0, 1 ou 2 et (a+b) valant 1, 2 ou 3 ;

(ii) et éventuellement d'autres motifs de formule (E2) :

$$Z_cSiO_{(4-c)/2} \qquad (E2)$$

dans laquelle :

- Z a la même signification que ci-dessus, et
- c représente un nombre entier valant 0, 1, 2 ou 3.

Il est entendu dans les formules (E1) et (E2) ci-dessus que, si plusieurs radicaux Y et Z sont présents, ils peuvent être identiques ou différents les uns des autres.

Dans la formule (E1), le symbole a peut préférentiellement valoir 1 ou 2, plus préférentiellement 1. De plus, dans les formules (E1) et (E2) Z peut représenter préférentiellement un radical monovalent choisi dans le groupe constitué par un groupe alkyle ayant 1 à 8 atomes de carbone, éventuellement substitué par au moins un atome d'halogène, et un groupe aryle et encore plus préférentiellement Z peut représenter un radical monovalent choisi dans le groupe constitué par méthyle, éthyle, propyle, 3,3,3-trifluoropropyle, xylyle, tolyle et phényle. En outre, dans la formule (E1), Y peut avantageusement représenter un radical choisi dans le groupe constitué par vinyle, propényle, 3-butényle, 5-hexényle, 9-décényle, 10-undécényle, 5,9-décadiényle et 6,11-dodécadiényle. De préférence, dans les formules (E1) et (E2) ci-dessus le symbole Y est un vinyle et le symbole Z est un méthyle.

L'organopolysiloxane **E** peut présenter de préférence une structure linéaire, éventuellement cyclique. Lorsqu'il s'agit d'organopolysiloxanes linéaires, ceux-ci peuvent être essentiellement constitués :

- de motifs siloxyles « D » choisis parmi les motifs de formules $Y_2SiO_{2/2}$, $YZSiO_{2/2}$ et $Z_2SiO_{2/2}$ ;
- de motifs siloxyles « M » choisis parmi les motifs de formules $Y_3SiO_{1/2}$, $Y_2ZSiO_{1/2}$, $YZ_2SiO_{1/2}$ et $Z_3SiO_{2/2}$.

A titre d'exemples de motifs « D », on peut citer les groupes diméthylsiloxy, méthylphénylsiloxy, méthylvinylsiloxy, méthylbuténylsiloxy, méthylhexénylsiloxy, méthyldécénylsiloxy et méthyldécadiénylsiloxy.

A titre d'exemple de motifs « M », on peut citer les groupes triméthylsiloxy, diméthylphénylsiloxy, diméthylvinylsiloxy et diméthylhexénylsiloxy.

Ces organopolysiloxanes linéaires peuvent être des huiles ayant une viscosité dynamique à 25°C comprise entre 1 mPa.s et 120 000 mPa.s et plus préférentiellement entre 10 mPa.s et 100 000 mPa.s.

Lorsqu'il s'agit d'un organopolysiloxane cyclique, celui-ci peut être constitué de motifs siloxyles « D » choisi parmi les motifs de formules $Y_2SiO_{2/2}$, $YZSiO_{2/2}$ et $Z_2SiO_{2/2}$. Des exemples de tels motifs « D » sont décrits ci-dessus. Cet organopolysiloxane cyclique peut avoir une viscosité dynamique à 25°C comprise entre 1 mPa.s et 5 000 mPa.s.

Des exemples d'organopolysiloxane E sont :

- les polydiméthylsiloxanes à extrémités diméthylvinylsilyles ;
- les poly(méthylphénylsiloxane-co-diméthylsiloxane) à extrémités diméthylvinylsilyles ;
- les poly(vinylméthylsiloxane-co-diméthylsiloxane) à extrémités diméthylvinylsilyles ;
- les poly(diméthylsiloxane-co-vinylméthylsiloxane) à extrémités triméthylsilyles ;
- les polyméthylvinylsiloxanes cycliques.

La résine silicone **F** est une résine silicone comprenant de 0,1 à 20% en poids, préférentiellement de 4 à 20% en poids, de groupes alcényles en $C_2$-$C_6$ liés à des atomes de silicium. Les groupes alcényles peuvent être situés sur des motifs siloxyles M, D ou T. Ces résines peuvent être préparées par exemple selon le procédé décrit dans le brevet US -A- 2 676 1820.1 à 20%. De préférence les groupes alcényles sont choisis parmi les vinyles, allyles et héxényles.

Par exemple, la résine silicone **F** peut comprendre :

- au moins deux motifs siloxyles différents choisis parmi ceux de formules (**F1**) et (**F2**) suivantes:

$$W_a Z'_b SiO_{(4-(a+b))/2} \qquad \textbf{(F1)}$$

  dans laquelle :

  - les symboles W, identiques ou différents, représentent chacun un groupe alcényle en $C_2$-$C_6$; de préférence un groupe vinyle, allyle et/ou héxényle et encore plus préférentiellement un groupe vinyle,
  - les symboles Z', identiques ou différents, représentent chacun un groupement hydrocarboné monovalent choisi parmi les groupes alkyles ayant de 1 à 8 atomes de carbone inclus tels que les groupes méthyle, éthyle, propyle et 3,3,3-trifluoropropyle, les groupes cycloalkyles comme les groupes cyclohexyle, cycloheptyle, cyclooctyle et les groupes aryle tels que xylyle, tolyle et phényle, et
  - le symbole a est égal à 1 ou 2, de préférence 1, le symbole b est égal à 0, 1 ou 2 et la somme a + b est égale à 1, 2 ou 3,

- et éventuellement des motifs de formule suivante:

$$Z'_c SiO_{(4-c)/2} \qquad \textbf{(F2)}$$

  dans laquelle Z' a la même signification que ci-dessus et le symbole c est égal à 0, 1, 2 ou 3, et

avec la condition qu'au moins un des motifs (**F1**) ou (**F2**) est un motif T ou Q.

Dans un mode préféré de réalisation de l'invention, la résine silicone **F** comporte au moins deux radicaux vinyles et est choisie parmi le groupe constitué par les résines silicones suivantes :

- $MD^{Vi}Q$ où les groupes vinyles sont inclus dans les motifs D,
- $MD^{Vi}TQ$ où les groupes vinyles sont inclus dans les motifs D,
- $MM^{Vi}Q$ où les groupes vinyles sont inclus dans une partie des motifs M,
- $MM^{Vi}TQ$ où les groupes vinyles sont inclus dans une partie des motifs M,
- $MM^{Vi}DD^{Vi}Q$ où les groupes vinyles sont inclus dans une partie des motifs M et D,
- et leurs mélanges,

avec :

- $M^{Vi}$ = motif siloxyle de formule $(R_2)$(vinyle)$SiO_{1/2}$

- $D^{Vi}$ = motif siloxyle de formule (R)(vinyle)$SiO_{2/2}$

et les groupements R, identiques ou différents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle. De préférence, les groupements R sont des méthyles.

De préférence la résine silicone **F** a pour formule $MD^{Vi}Q$ ou $MM^{Vi}Q$ telles que décrites ci-dessus.

Selon un mode de réalisation de l'invention, la résine silicone **F** est présente dans la composition **A** jusqu'à 40 % en poids par rapport au poids total de la composition **A,** de préférence entre 3 et 30% en poids par rapport au poids total de la composition **A** et plus préférentiellement entre 5 et 30% et plus préférentiellement encore entre 10 et 30%.

L'organohydrogénopolysiloxane **H** selon l'invention comprend au moins deux, et de préférence trois atomes d'hydrogène liés chacun à des atomes de silicium différent. Selon un mode de réalisation préféré, cet organohydrogénopolysiloxane **H** comprend :

(i) au moins deux motifs de formule (H1), et de préférence au moins trois motifs de formule (H1) :

$$H_dL_eSiO_{(4-(d+e))/2} \qquad (H1)$$

dans laquelle :

- L représente un radical monovalent différent d'un atome d'hydrogène,
- H représente l'atome d'hydrogène,
- d et e représentent des nombres entiers, d valant 1 ou 2, e valant 0, 1 ou 2 et (d+e) valant 1, 2 ou 3 ;

et éventuellement d'autres motifs de formule (H2) :

$$L_fSiO_{(4-f)/2} \qquad (H2)$$

dans laquelle :

- L a la même signification que ci-dessus, et
- f représente un nombre entier valant 0, 1, 2 ou 3.

Il est entendu dans les formules (H1) et (H2) ci-dessus que si plusieurs groupes L sont présents, ils peuvent être identiques ou différents les uns des autres. Dans la formule (H1), le symbole d peut préférentiellement valoir 1. De plus, dans la formule (H1) et dans la formule (H2), L peut représenter de préférence un radical monovalent choisi dans le groupe constitué par un groupe alkyle ayant 1 à 8 atomes de carbone, éventuellement substitué par au moins un atome d'halogène, et un groupe aryle. L peut avantageusement représenter un radical monovalent choisi dans le groupe constitué par méthyle, éthyle, propyle, 3,3,3-trifluoropropyle, xylyle, tolyle et phényle. Des exemples de motifs de formule (H1) sont les suivants : $H(CH_3)_2SiO_{1/2}$, $H(CH_3)SiO_{2/2}$ et $H(C_6H_5)SiO_{2/2}$.

L'organohydrogénopolysiloxane **H** peut présenter une structure linéaire, ramifiée, cyclique ou en réseau. Lorsqu'il s'agit d'organohydrogénopolysiloxane linéaires, ceux-ci peuvent être essentiellement constitués :

- de motifs siloxyles « D » choisi parmi les motifs de formules $HLSiO_{2/2}$ et $L_2SiO_{2/2}$ ; et
- de motifs siloxyles « M » choisis parmi les motifs de formules $HL_2SiO_{1/2}$ et $L_3SiO_{2/2}$,

avec le symbole L ayant la même signification que ci-dessus et le symbole H désignant un atome d'hydrogène.

Ces organohydrogénopolysiloxanes linéaires peuvent être des huiles ayant une viscosité dynamique à 25°C comprise entre 1 mPa.s et 100 000 mPa.s, préférentiellement entre 1 mPa.s et 5 000 mPa.s, et encore plus préférentiellement entre 1 mPa.s et 2000 mPa.s.

Lorsqu'il s'agit de organohydrogénopolysiloxanes cycliques, ceux-ci peuvent être constitués de motifs siloxyles « D » choisi parmi les motifs de formules $HLSiO_{2/2}$ et $L_2SiO_{2/2}$, ou de motifs siloxyle de formule $HLSiO_{2/2}$ uniquement. Les motifs de formule $L_2SiO_{2/2}$ peuvent être notamment des dialkylsiloxy ou des alkylarylsiloxy. Ces organohydrogénopolysiloxanes cycliques peuvent avoir une viscosité dynamique à 25°C comprise entre 1 mPa.s et 5 000 mPa.s.

Des exemples d' organohydrogénopolysiloxane **B** sont :

- les polydiméthylsiloxanes à extrémités hydrogénodiméthylsilyles ;
- les poly(diméthylsiloxane-co-hydrogénométhylsiloxane) à extrémités triméthylsilyles ;
- les poly(diméthylsiloxane-co-hydrogénométhylsiloxane) à extrémités hydrogénodiméthylsilyles ;

- les polyhydrogénométhylsiloxanes à extrémités triméthylsilyles ;
- les hydrogénométhylpolysiloxanes cycliques.

Lorsqu'il s'agit d'organohydrogénopolysiloxanes ramifiés ou en réseaux, ceux-ci peuvent comprendre en outre :

- des motifs siloxyles « T » choisis parmi les motifs de formules $HSiO_{3/2}$ et $LSiO_{3/2}$;
- des motifs siloxyles « Q » de formule $SiO_{4/2}$,
- avec le symbole H représentant un atome d'hydrogène et L ayant la même signification que ci-dessus.

Dans la composition **A**, le rapport molaire du nombre d'atomes d'hydrogène liés au silicium dans l'organohydrogénopolysiloxane **H** et l'additif **X** sur le nombre de groupes alcényle de l'organopolysiloxane **E** et de la résine **F** est compris entre 0,5 et 8, de préférence entre 1 et 6 et encore plus préférentiellement entre 1 et 5.

Selon un mode de réalisation préféré de l'invention, dans la composition **A** le ratio molaire entre les motifs SiH apportés par l'additif **X** et l'organohydrogénopolysiloxane **H** quand il est présent et les motifs epoxys apportés par l'additif **X** et l'organosilane **G** quand il est présent est compris entre 1 et 3.

Comme catalyseur **C** de polyaddition utile selon l'invention, on peut citer les composés d'un métal appartenant au groupe du platine bien connu de l'homme de l'art. Les métaux du groupe du platine sont ceux connus sous le nom de platinoïdes, appellation qui regroupe, outre le platine, le ruthénium, le rhodium, le palladium, l'osmium et l'iridium. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593. Le catalyseur généralement préféré est le platine. A titre d'exemples, on peut citer le platine noir, l'acide chloroplatinique, un acide chloroplatinique modifié par un alcool, un complexe de l'acide chloroplatinique avec une oléfine, un aldéhyde, un vinylsiloxane ou un alcool acétylénique, entre autres. La préférence va à la solution ou complexe de Karstedt, tel que décrit dans le brevet US-A-3 775 452, à l'acide chloroplatinique hexahydrate ou un catalyseur au platine comprenant des ligands carbènes. De préférence une la concentration en platine dans la composition silicone est comprise entre 5 et 80 ppm massique et encore plus préférentiellement entre 10 et 50 ppm massique.

L'inhibiteur **I** de la réaction d'hydrosilylation utile selon l'invention peut être choisi parmi les alcools $\alpha$-acétyléniques, les diesters $\alpha$-$\alpha$'-acétyléniques, les composés conjugués ène-yne, les cétones $\alpha$-acétyléniques, les acrylonitriles, les maléates, les fumarates et les mélanges de ceux-ci. Ces composés capables de remplir la fonction d'inhibiteur d'hydrosilylation sont bien connus de l'homme du métier. Ils peuvent être utilisés seuls ou en mélanges.

Un inhibiteur I de type alcool $\alpha$-acétylénique peut être choisi parmi les composés de formule (la) suivante :

$$(R^1)(R^2)C(OH)\text{-}C{\equiv}CH \qquad \text{(la)}$$

dans laquelle :

- le groupe $R^1$ représente un groupe alkyle, un groupe cycloalkyle, un groupe (cycloalkyl)alkyle, un groupe aryle ou un groupe arylalkyle,
- le groupe $R^2$ représente un atome d'hydrogène, un groupe alkyle, un groupe cycloalkyle, un groupe (cycloalkyl)alkyle, un groupe aryle ou un groupe arylalkyle,
- ou bien $R^1$ et $R^2$ constituent ensemble avec l'atome de carbone auquel ils sont liés un cycle aliphatique à 5, 6, 7 ou 8 chaînons, éventuellement substitué une ou plusieurs fois. Selon la formule (D1) :
- Par « alkyle », on entend une chaîne hydrocarbonée saturée contenant de 1 à 20 atomes de carbone, de préférence de 1 à 8 atomes de carbone. Un groupe alkyle peut être choisi dans le groupe constitué par méthyle, éthyle, isopropyle, n-propyle, tert-butyle, isobutyle, n-butyle, n-pentyle, isoamyle et 1,1-diméthylpropyle ;
- Par « cycloalkyle », on entend selon l'invention un groupe hydrocarboné saturé monocyclique ou polycyclique, de préférence monocyclique ou bicyclique, contenant de 3 à 20 atomes de carbone, de préférence de 5 à 8 atomes de carbone. Lorsque le groupe cycloalkyle est polycyclique, les multiples noyaux cycliques peuvent être rattachés les uns aux autres par une liaison covalente et/ou par un atome spinanique et/ou être condensés les uns aux autres. Un groupe cycloalkyle peut être choisi dans le groupe constitué par le cyclopropyle, le cyclobutyle, le cyclopentyle, le cyclohexyle, le cycloheptyle, le cyclooctyle, l'adamantane et le norborane ;
- Par « (cycloalkyl)alkyle », on entend selon l'invention un groupe cycloalkyle tel que défini ci-avant lié à un groupe alkyle tel que défini ci-avant également.
- Par « aryle », on entend selon l'invention un groupe hydrocarboné aromatique contenant de 5 à 18 atomes de carbone, monocyclique ou polycyclique. Un groupe aryle peut être choisi dans le groupe constitué par phényle, naphtyle, anthracényle et phénanthryle ;

- Par « arylalkyle », on entend selon l'invention un groupe aryle tel que défini ci-avant lié à un groupe alkyle tel que défini ci-avant également.

Selon un mode de réalisation préféré, dans la formule (Ia) $R^1$ et $R^2$ constituent ensemble avec l'atome de carbone auquel ils sont liés un cycle aliphatique non substitué à 5, 6, 7 ou 8 chaînons. Selon un autre mode de réalisation préféré, $R^1$ et $R^2$, identiques ou différents, représentent indépendamment l'un de l'autre un groupe alkyle monovalent en $C_1$ à $C_{12}$, de préférence en $C_1$ à $C_6$.
Un inhibiteur I qui est un alcool $\alpha$-acétylénique utile selon l'invention peut être choisi dans le groupe constitué par les composés suivants : 1-éthynyl-1-cyclopentanol, 1-éthynyl-1-cyclohexanol (aussi appelé ECH), 1-éthynyl-1-cycloheptanol, 1-éthynyl-1-cyclooctanol, 3-méthyl-1-butyn-3-ol (aussi appelé MBT), 3-méthyl-1-pentyn-3-ol, 3-méthyl-1-hexyn-3-ol, 3-méthyl-1-heptyn-3-ol, 3-méthyl-1-octyn-3-ol, 3-méthyl-1-nonyn-3-ol, 3-méthyl-1-decyn-3-ol, 3-méthyl-1-dodecyn-3-ol, 3-méthyl-1-pentadecyn-3-ol, 3-éthyl-1-pentyn-3-ol, 3-éthyl-1-hexyn-3-ol, 3-éthyl-1-heptyn-3-ol, 3,5-diméthyl-1-hexyn-3-ol, 3-isobutyl-5-méthyl-1-hexyn-3-ol, 3,4,4-triméthyl-1-pentyn-3-ol, 3-éthyl-5-méthyl-1-heptyn-3-ol, 3,6-diéthyl-1-nonyn-3-ol, 3,7,11-triméthyl-1-dodecyn-3-ol (aussi appelé TMDDO), 1,1-diphényl-2-propyn-1-ol, 3-butyn-2-ol, 1-pentyn-3-ol, 1-hexyn-3-ol, 1-heptyn-3-ol, 5-méthyl-1-hexyn-3-ol, 4-éthyl-1-octyn-3-ol 9-éthynyl-9-fluorenol et leurs mélanges.
Un inhibiteur **I** de type diester $\alpha$-$\alpha$'-acétylénique peut être choisi parmi les composés de formule (Ib) suivante :

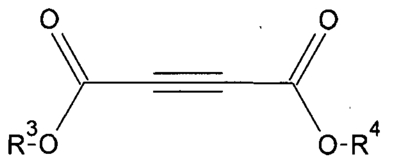
, (Ib)

dans laquelle les groupe $R^3$ et $R^4$, identiques ou différents, représentent indépendamment l'un de l'autre un groupe alkyle, un groupe cycloalkyle, un groupe (cycloalkyl)alkyle, un groupe aryle, un groupe arylalkyle ou un groupe silyle.
Par « silyle », on entend selon l'invention un groupe de formule $-SiR_3$, chaque R représentant indépendamment un groupe alkyle contenant de 1 à 20 atomes de carbone, de préférence de 1 à 8 atomes de carbone. Un groupe silyle peut être par exemple le groupe triméthylsilyle.
Selon un mode de réalisation particulier, dans la formule (Ib) $R^3$ et $R^4$, identiques ou différents, représentent indépendamment l'un de l'autre un groupe alkyle en $C_1$ à $C_{12}$, de préférence en $C_1$ à $C_6$, ou le groupe triméthylsilyle. Un inhibiteur D qui est un diester $\alpha$-$\alpha$'-acétylénique utile selon l'invention peut être choisi dans le groupe constitué par les composés suivants: l'acétylène-dicarboxylate de diméthyle (DMAD), l'acétylène-dicarboxylate de diéthyle, l'acétylène-dicarboxylate de tert-butyle et l'acétylène-dicarboxylate de bis(triméthylsilyle) .
Un inhibiteur **I** de type composé conjugué ène-yne peut être choisi parmi les composés de formule (Ic) suivante :

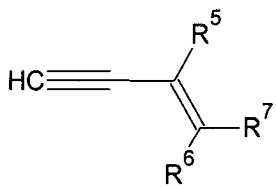
(Ic)

dans laquelle :

- les groupes $R^5$, $R^6$ et $R^7$ représentent, indépendamment les uns des autres, un atome d'hydrogène, un groupe alkyle, un groupe cycloalkyle, un groupe (cycloalkyl)alkyle, un groupe aryle ou un groupe arylalkyle,
- ou bien au moins deux groupes parmi les groupes $R^5$, $R^6$ et $R^7$ constituent ensemble avec le ou les atomes de carbone auxquels ils sont liés un cycle aliphatique à 5, 6, 7 ou 8 chaînons, éventuellement substitué une ou plusieurs fois.

Selon un mode de réalisation particulier, les groupes $R^5$, $R^6$ et $R^7$ représentent, indépendamment les uns des autres, un atome d'hydrogène, un groupe alkyle en $C_1$ à $C_{12}$, de préférence en $C_1$ à $C_6$, ou un groupe aryle. Un inhibiteur D qui est un composé conjugué ène-yne utile selon l'invention peut être choisi dans le groupe constitué par les composés suivants: le 3-méthyl-3-pentène-1-yne, le 3-méthyl-3-hexène-1-yne, le 2,5-diméthyl-3-hexène-1-yne, le 3-éthyl-3-butène-1-yne, et le 3-phényl-3-butène-1-yne. Selon un autre mode de réalisation particulier, deux groupes choisis parmi les

groupes $R^5$, $R^6$ et $R^7$ constituent ensemble avec le ou les atomes de carbone auxquels ils sont liés un cycle aliphatique non substitué à 5, 6, 7 ou 8 chaînons et le troisième groupe restant représente un atome d'hydrogène ou un groupe alkyle en $C_1$ à $C_{12}$, de préférence en $C_1$ à $C_6$. Un inhibiteur D qui est un composé conjugué ène-yne utile selon l'invention peut être le 1-éthynyl-1-cyclohexène.

Un inhibiteur **I** de type cétone α-acétylénique peut être choisi parmi les composés de formule (Id) suivante :

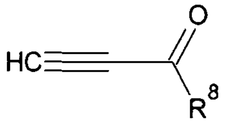

(Id)

dans laquelle $R^8$ représente un groupe alkyle, un groupe cycloalkyle, un groupe (cycloalkyl)alkyle, un groupe aryle ou un groupe arylalkyle, les groupes alkyles, cycloalkyles, (cycloalkyl)alkyle, aryle ou arylalkyle pouvant éventuellement être substitué une ou plusieurs fois par un atome de chlore, de brome ou d'iode.
Selon un mode de réalisation préféré, $R^8$ représente un groupe alkyle monovalent en $C_1$ à $C_{12}$, de préférence en $C_1$ à $C_6$, éventuellement être substitué une ou plusieurs fois par un atome de chlore ou de brome, ou un groupe cycloalkyle, ou un groupe aryle. Un inhibiteur I qui est une cétone α-acétylénique utile selon l'invention peut être choisi dans le groupe constitué par les composés suivants: la 1-octyn-3-one, la 8-chloro-1-octyn-3-one, la 8-bromo-1-octyn-3-one, la 4,4-diméthyl-1-octyn-3-one, la 7-chloro-1-heptyn-3-one, la 1-hexyn-3-one, la 1-pentyn-3-one, la 4-méthyl-1-pentyn-3-one, la 4,4-diméthyl-1-pentyn-3-one, la 1-cyclohexyl-1-propyn-3-one, le benzoacétylène et le o-chlorobenzoyl-acétylène.

Un inhibiteur **I** de type acrylonitrile peut être choisi parmi les composés de formule (Ie) suivante :

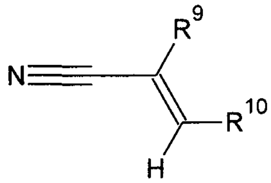

(Ie)

dans laquelle $R^9$ et $R^{10}$ représentent, indépendamment l'un de l'autre, un atome d'hydrogène, un atome de chlore, de brome ou d'iode, un groupe alkyle, un groupe cycloalkyle, un groupe (cycloalkyl)alkyle, un groupe aryle ou un groupe arylalkyle, les groupes alkyles, cycloalkyles, (cycloalkyl)alkyle, aryle ou arylalkyle pouvant éventuellement être substitué une ou plusieurs fois par un atome de chlore, de brome ou d'iode. Un inhibiteur D qui est un acrylonitrile utile selon l'invention peut être choisi dans le groupe constitué par les composés suivants: l'acrylonitrile, le méthacrylonitrile , le 2-chloroacrylonitryle, le crotononitrile et le cinnamonitrile.

Un inhibiteur **I** de type maléate ou fumarate peut être choisi parmi les composés de formules (If) et (Ig) suivantes :

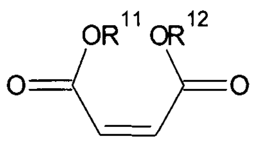

(If)

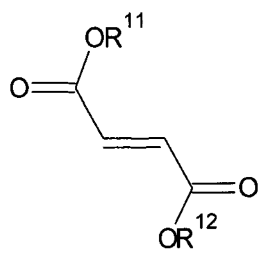

(Ig)

dans lesquelles $R^{11}$ et $R^{12}$, identiques ou différents, représentent indépendamment l'un de l'autre un groupe alkyle ou alcényle, un groupe cycloalkyle, un groupe (cycloalkyl)alkyle, un groupe aryle ou un groupe arylalkyle, lesdits groupes alkyles, alcényles, cycloalkyles, (cycloalkyl)alkyles, aryles et arylalkyles pouvant être substitués par un groupe alcoxy.
Par « alcényle », on entend selon l'invention une chaîne hydrocarbonée saturée contenant de 1 à 20 atomes de carbone, de préférence de 1 à 8 atomes de carbone comprenant au moins une double insaturation. Un groupe alcényle peut être choisi dans le groupe constitué par vinyle ou allyle.

Par « alcoxy », on entend selon les formules (If) ou (Ig), un groupe alkyle tel que défini ci-avant lié à un atome d'oxygène. Un groupe alcoxy peut être choisi dans le groupe constitué par méthoxy, éthoxy, propoxy et butoxy.

Selon un mode de réalisation particulier, $R^{11}$ et $R^{12}$, identiques ou différents, représentent indépendamment

l'un de l'autre un groupe alkyle ou alcényle en $C_1$ à $C_{12}$, de préférence en $C_1$ à $C_6$, éventuellement substitué par un groupe alcoxy en $C_1$ à $C_6$.

Un inhibiteur I qui est un maléate ou un fumarate utile selon l'invention peut être choisi dans le groupe constitué par le fumarate de diéthyle, le maléate de diéthyle, le fumarate de diallyle, le maléate de diallyle et le maléate de bis-(méthoxyisopropyle).

Des inhibiteurs I choisis parmi les alcools $\alpha$-acétyléniques, les diesters $\alpha$-$\alpha$'-acétyléniques, les composés conjugués ène-yne, les cétones $\alpha$-acétyléniques, les acrylonitriles, les maléates, les fumarates sont disponibles dans le commerce. On peut citer notamment le 1-éthynyl-1-cyclohexanol (aussi appelé ECH) qui est disponible commercialement chez BASF, le maléate de diméthyle qui est disponible commercialement chez DMS et l'acétylène-dicarboxylate de diméthyle qui est disponible chez City Chemical LLC.

Ces inhibiteurs **I** sont ajoutés en quantité en poids comprise entre 1 et 50 000 ppm par rapport au poids de la composition silicone **A,** notamment entre 10 et 10 000 ppm et de préférence entre 20 et 2000 ppm.

Comme charge **J** on peut utiliser des charges minérales qui sont des produits très finement divisés dont le diamètre particulaire moyen est inférieur à 0,1 $\mu$m. Ces charges minérales peuvent être choisies parmi les matières siliceuses. Les charges siliceuses renforçantes sont choisies parmi les silices colloïdales, les poudres de silice de combustion et de précipitation ou leur mélange. Ces poudres présentent une taille moyenne de particule généralement inférieure à 0,1 $\mu$m et une surface spécifique BET supérieure à 50 $m^2$/g, de préférence comprise entre 150 et 350 $m^2$/g. Ces silices peuvent être incorporées telles quelles ou après avoir été traitées par des composés organosiliciques habituellement utilisés pour cet usage. Parmi ces composés figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Des charges siliceuses semi-renforçantes telles que des terres de diatomées ou du quartz broyé, peuvent être également employées.

En plus des silices renforçantes ou à la place de celles-ci, on peut ajouter des charges minérales semi-renforçantes ou de bourrage. Des exemples de ces charges non siliceuses utilisables seules ou en mélange sont le carbonate de calcium, éventuellement traité en surface par un acide organique ou par un ester d'un acide organique, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum et les microbilles de verre. Ces charges sont plus grossières avec généralement un diamètre particulaire moyen supérieur à 0,1 $\mu$m et une surface spécifique généralement inférieure à 30 $m^2$/g..Ces charges peuvent avoir été modifiées en surface par traitement avec les divers composés organosiliciques habituellement employés pour cet usage.

Lorsqu'elle est présente, la quantité de charge **J** présente dans la composition **A** est de 5 à 50% en poids par rapport au poids total de composition **A**, de préférence de 5 à 40% et plus préférentiellement encore de 10 à 30%.

La composition **A** peut contenir en outre un organopolysiloxane non fonctionnalisé **K** et notamment exempt de fonctions alcényles ou hydrogénosilyles. D'une manière préférée, l'organosiloxane non fonctionnalisé **K** est linéaire ou sensiblement linéaire. Il s'agit de préférence de polymères $\alpha,\omega$-bis(triorganosiloxy)diorganopolysiloxanes de viscosités d'au moins 10 mPa.s, formés essentiellement de motifs diorganosiloxy, les radicaux organiques liés aux atomes de silicium étant choisis parmi les radicaux méthyle, et phényle. La viscosité de ces polymères peut atteindre 10 millions de mPa.s à 25°C. Ils comprennent donc des huiles d'aspect fluide à visqueux et des gommes. Ces organopolysiloxanes sont des produits commerciaux comme par exemple les produits de la gamme BLUESIL®47V (par exemple 47V50, 47V100, 47V500, 47V500, 47V12500 ou 47V30000) de la société Bluestar Silicones France, et sont largement divulgués tant en ce qui concerne leurs structures que leurs synthèses dans la littérature technique. Lorsqu'il s'agit de gommes la viscosité est au moins égale à 600 000 mPa.s.

Le terme « gomme » est utilisé pour des composés organosiliciques présentant des viscosités classiquement supérieures à 600000 mPa.s ce qui correspond à un poids moléculaire supérieur à 260000 g/mole. La consistance ou pénétrabilité d'une gomme est déterminée à 25°C au moyen d'un pénétromètre de type PNR12 ou modèle équivalent permettant d'appliquer sur l'échantillon une tête cylindrique dans des conditions normalisées. La pénétrabilité d'une gomme est la profondeur exprimée en dixième de millimètres à laquelle un cylindre calibré pénètre dans l'échantillon pendant une minute. Ces polymères qui jouent le rôle de plastifiants peuvent être introduits à raison d'au plus 40 parties en poids, de préférence de 1 à 20 parties en poids pour 100 parties en poids de composition silicone **A.**

Pour améliorer sa stabilité, la composition **A** peut également comprendre un additif stabilisant. On peut par exemple citer des dérivés silylés de l'acide phosphorique tels que les esters silylés de l'acide phosphorique.

La composition **A** selon l'invention peut comprendre en outre un additif de coloration ou base colorante.

La composition **A** peut comprendre également un additif pour améliorer la résistance au feu. Comme additif pour améliorer la résistance au feu, on peut citer par exemple des composés à groupement phényle substitué par un groupement amino (secondaire ou tertiaire). Des exemples de tels additifs se trouvent dans la référence US 5,516,938. Les quantités utiles de tels additifs sont généralement comprisent entre 0.01 et 1 partie en poids par rapport à la quantité

totale de la composition.

Selon un autre mode de réalisation la composition **A** ne comprend pas de vinyltrimethoxysilane.

Selon un autre de ses aspects, la présente invention est relative à un système bicomposant précurseur de la composition **A** selon l'invention et telle que décrite ci-dessus se présentant en deux parties **A1** et **A2** distinctes destinées à être mélangées pour former la composition **A,** caractérisé en ce que l'une de ces parties contient le catalyseur C tandis que l'autre partie contient l'additif **X** et l'organohydrogénpolysiloxane **H.**

Une autre caractéristique encore de ce système précurseur est que la résine **F** peut être mise en oeuvre dans la partie **A1** ou la partie **A2** ou dans les deux parties **A1** et **A2.** Le catalyseur **C** ne doit pas être présent dans la partie **A1** ou **A2** contenant l'additif **X** et l'organohydrogénopolysiloxane **H.**

La viscosité des parties **A1** et **A2** et de leur mélange peut être ajustée en jouant sur les quantités des constituants et en choisissant des organopolysiloxanes de viscosités différentes. Une fois mélangées l'une à l'autre, les parties **A1** et **A2** forment une composition silicone **A** prête à l'emploi, qui peut être appliquée sur le support fibreux par enduction, transfert, gravure ou imprégnation. De préférence, la composition silicone **A** sera appliquée sur le support fibreux par enduction avec tout moyen d'enduction approprié par exemple une râcle ou un cylindre. On visera en général une épaisseur déposée finale après réticulation comprise entre 25 et 300 $\mu$m, notamment entre 50 et 200 $\mu$m. Les compositions selon l'invention sont réticulées par voie thermique et/ou par rayonnement électromagnétique.

L'invention concerne également l'élastomère silicone susceptible d'être obtenu par réticulation et/ou durcissement de la composition silicone **A** selon l'invention et telle que décrite ci-dessus.

Les compositions silicones selon l'invention peuvent être utilisées pour le revêtement ou l'enduction de supports souples, notamment textiles fibreux tissés, tricotés ou non tissés, et, de préférence de supports tissés ou tricotés en fibres synthétiques, avantageusement en polyester ou en polyamide.

La présente invention concerne également un procédé pour préparer un support fibreux enduit par un élastomère silicone comprenant les étapes suivantes :

a) la préparation d'une composition silicone **A** selon l'invention et telle que définie ci-dessus,
b) l'application d'au moins 10 g/$m^2$ sur une ou deux faces d'un support fibreux de la composition silicone **A** préparée à l'étape a), et
c) la réticulation du dépôt formé à l'étape b) pour former un élastomère par chauffage à une température pouvant atteindre 210°C, par exemple par action d'un rayonnement électromagnétique ou d'un air chaud.

De manière générale, l'enduction dont il s'agit ici peut correspondre au dépôt d'une couche unique sur au moins une des faces du support fibreux (enduction primaire). Mais il peut s'agir encore du dépôt d'une seconde couche ou éventuellement d'une troisième couche sur au moins une des faces du support fibreux déjà enduit (enduction secondaire) pour avoir au total l'épaisseur voulue garantissant les meilleures performances possibles.

A l'étape b) du procédé selon l'invention, la composition silicone A peut être appliquée par tout moyen d'enduction approprié par exemple à l'aide d'une râcle ou d'un cylindre. De préférence on applique à l'étape b) une quantité de composition A de 10 à 150 g/$m^2$ de support fibreux, préférentiellement de 10 à 100 g/$m^2$ et encore plus préférentiellement de 10 à 60 g/$m^2$.

A l'étape c) du procédé selon l'invention la réticulation de la compositon appliquée sur le support fibreux peut être provoqué par voie thermique et/ou par rayonnement électromagnétique, de préférence par rayonnement infrarouge. La température de réticulation est comprise par exemple de 120 à 200°C pendant une durée inférieure à 5 minutes.

La support fibreux de l'invention peut être d'origine naturelle, artificielle et/ou synthétique. Il peut s'agir d'un support fibreux tissé, tricoté ou non tissé. Lorsqu'il s'agit d'un support fibreux tissé ou tricoté, c'est-à-dire un tissu ou un tricot, les fils sont avantageusement à base de polymère thermoplastique. A titre d'exemple on peut citer comme (co)polymères thermoplastique convenable dans le cadre de l'invention : les polyoléfines, les polyesters, les polyoxydes d'alkylène, les polyoxyalkylènes, les polyhalogénoalkylènes, les poly(alkylène-phtalate ou téréphtalate), les poly(phény ou phénylène), poly(oxyde ou sulfure de phénylène), les acétates de polyvinyle, les alcools polyvinyliques, les halogénures de polyvinyle, les halogénures de polyvinylidène, les polyvinyles nitriles, les polyamides, les polyimides, les polycarbonates, les polysiloxanes, les polymères d'acide acrylique ou méthacrylique, les polyacrylates ou méthacrylates, les polymères naturels que sont la cellulose et ses dérivés, les polymères synthétiques tels que les élastomères synthétiques, ou les copolymères thermoplastiques comprenant au moins un monomère identique à l'un quelconque des monomères inclus dans les polymères susmentionnés, ainsi que les mélanges et/ou les alliages de tous ces (co)polymères.

Lorsque le support fibreux est en polymère thermoplastique, il est de préférence en polyester, tel que le polyéthylène téréphtalate (PET), le polypropylène téréphtalate (PPT), le polybutylène téréphtalate (PBT), leurs copolymères et mélanges, ou en polyamide tel que le polyamide 6, le polyamide 6.6, le polyamide 4, le polyamide 1.1, le polyamide 1.2, les polyamides 4-6, 6-10, 6-12, 6-36, 12- 12, leurs copolymères et mélanges. Les fils peuvent être à base d'un mélange de polymères thermoplastiques ou de copolymères thermoplastiques.

Dans le domaine des sacs gonflables de sécurité le titre global des fils formant le tissu ou tricot est habituellement

compris entre 100 et 950 decitex ou dtex. De préférence, le titre global des fils formant le tissu ou tricot est compris entre 350 et 750 dtex. Le tissu ou tricot de base de l'invention présente avantageusement une poids avant enduction compris entre 150 et 250 g/m$^2$. On peut ainsi citer de tels tissus en polyamide de 470 dtex ayant ces caractéristiques. On notera que l'on pourra aussi utiliser des substrats textiles, notamment tissus, formés de fibres textiles techniques, c'est-à-dire de fibres textiles présentant des propriétés améliorées par rapport aux fibres classiques, par exemple ténacité accrue, afin de conférer des propriétés particulières ou renforcées en fonction des applications du support ou tissu enduit.

Les tissus décrits ci-dessus peuvent être tissés sur des métiers à tisser à jet d'air, à jet d'eau ou à lance. Ces tissus sont obtenus de préférence sans étape de lavage après tissage, ce qui simplifie la méthode d'obtention des tissus, et diminue leur coût.

De plus, ces tissus peuvent également être obtenus sans étape de traitement thermique après tissage. En effet une étape de traitement thermique est généralement réalisée sur les tissus en vue de leur apporter une stabilité dimensionnelle. Cette étape de traitement thermique peut être réalisée simultanément à l'étape de séchage du tissu, laquelle étape de séchage est nécessaire lorsqu'une étape de lavage a été réalisée sur le tissu. Dans le cadre de la présente invention, lorsque l'étape de lavage est supprimée, l'étape de séchage n'est plus nécessaire.

Selon un mode de réalisation préféré, le procédé selon l'invention est caractérisé en ce que le support fibreux n'a pas subi une étape de lavage après tissage.

Selon un autre mode de réalisation, le procédé selon l'invention est caractérisé en ce que le support fibreux n'a pas subi une étape de traitement thermique après tissage.

L'invention concerne aussi un support fibreux enduit par un élastomère silicone susceptible d'être obtenu par le procédé selon l'invention et tel que décrit ci-dessus. Il s'agit d'un support fibreux tissé, tricoté ou non tissé caractérisé en ce qu'il comprend au moins un revêtement obtenu selon le procédé selon l'invention et tel que décrit ci-dessus ou obtenu par réticulation d'une composition silicone **A** selon l'invention et telle que décrite ci-dessus.

L'invention concerne enfin les sacs gonflables de sécurité comprenant un élastomère silicone selon l'invention et tel que décrit ci-dessus ou un support fibreux selon l'invention et tel que décrit ci-dessus

Pour terminer, l'invention concerne aussi l'utilisation de la composition silicone d'enduction **A** réticulable selon l'invention et telle que décrite ci-dessus pour l'enduction de support fibreux tissés, tricotés, ou non tissés. D'une manière préférentielle ces supports fibreux enduits sont destinés à former des sacs gonflables pour la protection des occupants des véhicules mais ils peuvent aussi être utilisés pour la fabrication de toiles de tente, toiles de parachute et analogues.

Ainsi l'invention concerne également, l'utilisation de la composition silicone **A** selon l'invention et telle que décrite ci-dessus pour l'enduction de sac gonflable destiné à la protection d'un passager dans un véhicule.

Les exemples, qui suivent, de préparation de compositions et de leur application comme revêtement de tissu selon le procédé de l'invention, permettront de mieux comprendre l'invention.

## EXEMPLES

1) Définition des constituants :

- Organopolysiloxane **E1** : huile polydiméthylsiloxane bloquée à chacune des extrémités des chaînes par un motif $(CH_3)_2ViSiO_{1/2}$, ayant une viscosité de 60000 mPa.s.
- Résine **F1** : organopolysiloxane de formule $MM^{Vi}Q$ contenant 1.1 % en poids de groupes vinyles.
- Catalyseur **C1** : platine métal, introduit sous la forme d'un complexe organométallique à 10 % en poids de platine métal, connu sous le nom de catalyseur de Karstedt,
- Organohydrogénopolysiloxane **H1** ÷huile poly(diméthyl)(hydrogénométhyl)siloxane ayant une viscosité de 25 mPa.s et contenant 0,7 mol de fonction Si-H pour 100 g d'huile
- Inhibiteur **I1** : éthynyl-1-cyclohexanol-1 ou ECH,
- Charge **J1** : Carbonate de calcium précipité, non traité avec un diamètre équivalent moyen de 2 μm.

Composants testés comme promoteurs d'adhésion :

- glycidoxypropyltriméthoxysilane (GLYMO),
- titanate de butyle $Ti(OBu)_4$ (TBT)
- Différents additifs **K1** à **K11** détailllés ci après (voir tableau 1)

2) Synthèse des additifs K1 à K11

Différents additifs ont été synthétisés constitués de:

- n motifs $YCH_3SiO_{2/2}$
- m motifs $HCH_3SiO_{2/2}$
- p motifs $(CH_3)_2SiO_{2/2}$
- 2 motifs $R^1(CH_3)_2Si_{1/2}$ avec $R^1 = CH_3$ ou H

où Y est le groupement époxy de formule suivante

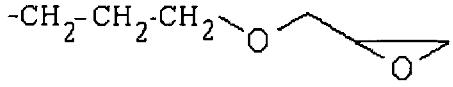

**Y**

**Additif K1:**

Dans un réacteur de 1 L sous azote, on introduit 181,0 g de toluène. Le milieu est placé sous agitation et chauffé à 85°C. Lorsque la température est atteinte, 10,2 mg d'un complexe de platine carbène, commercialisé par Umicore sous le nom commercial Umicore HS432®, est introduit. Puis, un mélange d'allyl glycidyl ether (AGE) (236,8 g, 2,07 mol) et d'un polyméthylhydrogénosiloxane **H2** avec 9 motifs $(CH_3)HSiO_{2/2}$ et deux motifs terminaux $(CH_3)_3SiO_{1/2}$ (363,2 g, SiH = 4,77 mol) est ajouté goutte à goutte pendant 4 heures. Après retour à température ambiante, le milieu réactionnel est dévolatilisé à 25-30°C sous 0-3 mbar pendant 30 min puis à 85°C (consigne) sous 1 mbar pendant 3h pour conduire à une huile silicone fonctionnalisée composée de n motifs $YCH_3SiO_{2/2}$ , m motifs $HCH_3SiO_{2/2}$ et deux motifs $(CH_3)_3Si_{1/2}$ avec les caractéristiques suivantes : n+m = 9 ; [SiH] = 586 mmol/100g ; [Epoxy] = 291 mmol/100g ; Viscosité = 32 mPa.s.

**Additif K2:**

Dans un réacteur de 1 L sous azote, on introduit 181,92 g de toluène. Le milieu est placé sous agitation et chauffé à 85°C. Lorsque la température est atteinte, 10,3 mg d'un complexe de platine carbène, commercialisé par Umicore sous le nom commercial Umicore HS432®, est introduit. Puis, un mélange d'allyl glycidyl ether (AGE) (280,3 g, 2,46 mol) et de polyméthylhydrogénosiloxane **H2** (320,6 g, SiH = 4,25 mol) est ajouté goutte à goutte pendant 7 heures. Après retour à température ambiante, le milieu réactionnel est dévolatilisé à 25-30°C sous 0-3 mbar pendant 30 min puis à 85°C (consigne) sous 1 mbar pendant 3h pour conduire à une huile silicone fonctionnalisée composée de n motifs $YCH_3SiO_{2/2,}$ m motifs $HCH_3SiO_{2/2}$ et deux motifs $(CH_3)_3Si_{1/2}$ avec les caractéristiques suivantes : n+m = 9 [SiH] = 433 mmol/100g ; [Epoxy] = 347 mmol/100g ; Viscosité = 67 mPa.s.

**Additif K3**

Dans un réacteur de 10L sous azote, on introduit 1733,9 g de toluène et 2,7 g de d'un complexe de platine carbène, commercialisé par Umicore sous le nom commercial Umicore HS432®, en solution dans du toluène. Ce mélange est placé sous agitation et chauffé à 77°C. Un mélange d'allyl glycidyl ether (AGE) (390,5 g, 3,42 mol) et de polyméthylhydrogénosiloxane **H3** comprenant 20 motifs $(CH_3)HSiO_{2/2}$ et deux motifs terminaux $(CH_3)_3SiO_{1/2}$ (5599,5 g, SiH = 82,23 mol) est ajouté à l'aide d'une pompe pendant 54 min. Lorsque l'ajout est terminé, le chauffage est maintenu pendant 1 heure. Puis le chauffage est arrêté et après retour à température ambiante, le milieu réactionnel est dévolatilisé à 40°C sous 5 mbar pendant 1 heure puis montée progressive de la température jusqu'à 85°C pendant 4h. La température est maintenue à 85°C pendant 1h pour conduire à une huile silicone fonctionnalisée (7727,8g) composée de n motifs $YCH_3SiO_{2/2}$, m motifs $HCH_3SiO_{2/2}$ et deux motifs $(CH_3)_3Si_{1/2}$ avec les caractéristiques suivantes : n+m = 20, [SiH] = 1,30 mol/100g ; [Epoxy] = 37,7 mmol/100g ; Viscosité = 12,3 mPa.s.

**Additif K4 :**

Dans un tricol de 1 L sous azote, on introduit 142,0 g de toluène. Le milieu est placé sous agitation magnétique et chauffé à 85°C. Lorsque la température est atteinte, 1,1910 g de Pt/C est introduit. Puis, un mélange d'allyl glycidyl ether (AGE) (180,6 g, 1,58 mol) et de polyméthylhydrogénosiloxane **H3** (420,0 g, SiH = 6,27 mol) est ajouté goutte à goutte pendant 16 heures. Après retour à température ambiante, le milieu réactionnel est filtré, traité et filtré puis dévolatilisé à 25-30°C sous 0-3 mbar pendant 30 min puis à 90°C (consigne) sous 1 mbar pendant 3h pour conduire à une huile silicone fonctionnalisée composée de n motifs $YCH_3SiO_{2/2}$, m motifs $HCH_3SiO_{2/2}$ et deux motifs $(CH_3)_3Si_{1/2}$ avec les caractéristiques suivantes : n+m = 20, [SiH] = 892 mmol/100g ; [Epox] = 198 mmol/100g ; Viscosité = 103 mPa.s.

**Additif K5** :

Dans un ballon de 500 mL sous azote, on introduit 100,1 g de toluène et 10 mg d'un complexe de platine carbène, commercialisé par Umicore sous le nom commercial Umicore HS432®. Ce mélange est placé sous agitation magnétique et chauffé à 85°C. Un mélange d'allyl glycidyl ether (AGE) (150,2 g, 1,32 mol) et de polyméthylhydrogénosiloxane **H3** (349,0 g, SiH = 5,21 mol) est ajouté goutte à goutte pendant 3 heures. Lorsque l'ajout est terminé, l'ampoule d'addition est rincée avec 30 g de toluène et le chauffage est maintenu pendant 2 heures. Après retour à température ambiante, le milieu réactionnel est dévolatilisé à 92°C sous 1 mbar pendant 3 heures pour conduire à une huile silicone fonctionnalisée (455,0g) composée de n motifs $YCH_3SiO_{2/2}$, m motifs $HCH_3SiO_{2/2}$ et deux motifs $(CH_3)_3Si_{1/2}$ avec les caractéristiques suivantes : n+m = 20, [SiH] = 999 mmol/100g ; [Epoxy] = 189,7 mmol/100g ; Viscosité = 101 mPa.s.

**Additif K6** :

Dans un ballon de 500 mL sous azote, on introduit 105,1 g de toluène et 11 mg d'un complexe de platine carbène, commercialisé par Umicore sous le nom commercial Umicore HS432®. Ce mélange est placé sous agitation magnétique et chauffé à 85°C. Un mélange d'allyl glycidyl ether (AGE) (249,2 g, 2,18 mol) et de polyméthylhydrogénosiloxane **H3** (302,6 g, SiH = 4,52 mol) est ajouté goutte à goutte pendant 3 heures. Lorsque l'ajout est terminé, l'ampoule d'addition est rincée avec 45,4 g de toluène et le chauffage est maintenu pendant 2 heures. Après retour à température ambiante, le milieu réactionnel est dévolatilisé à 92°C sous 1 mbar pendant 3 heures pour conduire à une huile silicone fonctionnalisée (449,0g) composée de n motifs $YCH_3SiO_{2/2}$, m motifs $HCH_3SiO_{2/2}$ et deux motifs $(CH_3)_3Si_{1/2}$ avec les caractéristiques suivantes : n+m = 20, [SiH] = 568 mmol/100g ; [Epoxy] = 324,3 mmol/100g ; Viscosité = 186 mPa.s.

**Additif K7 :**

Dans un ballon de 500 mL sous azote, on introduit 107,1 g de toluène et 13,3 mg d'un complexe de platine carbène, commercialisé par Umicore sous le nom commercial Umicore HS432®. Ce mélange est placé sous agitation magnétique et chauffé à 85°C. Un mélange d'allyl glycidyl ether (AGE) (333,8 g, 2,92 mol) et de polyméthylhydrogénosiloxane H3 (291,1 g, SiH = 4,35 mol) est ajouté goutte à goutte pendant 3 heures. Lorsque l'ajout est terminé, l'ampoule d'addition est rincée avec 30 g de toluène et le chauffage est maintenu pendant 2 heures. Après retour à température ambiante, le milieu réactionnel est dévolatilisé à 92°C (consigne) sous 1 mbar pendant 3 heures pour conduire à une huile silicone fonctionnalisée (534,0g) composée de n motifs $YCH_3SiO_{2/2}$, m motifs $HCH_3SiO_{2/2}$ et deux motifs $(CH_3)_3Si_{1/2}$ avec les caractéristiques suivantes : n+m = 20 ; [SiH] = 376,7 mmol/100g ; [Epoxy] = 380,7 mmol/100g ; Viscosité = 610 mPa.s.

**Additif K8** :

Dans un ballon de 500 mL sous azote, on introduit 469,7 g d'allyl glycidyl ether (AGE) (4,11 mol) et 14,3 mg d'un complexe de platine carbène, commercialisé par Umicore sous le nom commercial Umicore HS432®. Ce mélange est placé sous agitation magnétique et chauffé à 85°C. Le polyméthylhydrogénosiloxane **H3** (205,4 g, SiH = 3,01 mol) est ajouté goutte à goutte pendant 5 heures. Une exothermie de 90°C est observée. Lorsque l'ajout est terminé, le chauffage est maintenu pendant 3 heures. Après retour à température ambiante, le milieu réactionnel est dévolatilisé à 90°C sous 1 mbar pendant 3 heures pour conduire à une huile silicone fonctionnalisée composée de 20 motifs $YCH_3SiO_{2/2}$et deux motifs $(CH_3)_3Si_{1/2}$ avec les caractéristiques suivantes [SiH] = 0 mmol/100g ; [Epoxy] = 537 mmol/100g ; Viscosité = 929 mPa.s.

**Additif K9 :**

Dans un tricol de 1 L sous azote, on introduit 178,2 g de toluène. Le milieu est placé sous agitation magnétique et chauffé à 85°C. Lorsque la température est atteinte, 0,6280 g de Pt/C est introduit. Puis, un mélange d'allyl glycidyl ether (AGE) (77,6 g, 0,68 mol) et de polyméthylhydrogénosiloxane **H4** comprenant 16 motifs $(CH_3)HSiO_{2/2}$, 18 motifs $(CH_3)_2SiO_{2/2}$ et deux motifs terminaux $(CH_3)_2HSiO_{1/2}$ (522,9 g, SiH = 6,80 mol) est ajouté goutte à goutte pendant 8 heures. Après retour à température ambiante, le milieu réactionnel est filtré, traité et filtré puis dévolatilisé à 25-30°C sous 0-3 mbar pendant 30 min puis à 90°C sous 1 mbar pendant 2h pour conduire à une huile silicone fonctionnalisée composée de 18 motifs $(CH_3)_2SiO_{2/2}$, n motifs $YCH_3SiO_{2/2}$, m motifs $HCH_3SiO_{2/2}$, et deux motifs $H(CH_3)_2Si_{1/2}$ avec les caractéristiques suivantes : n+m = 16 ; [SiH] = 519 mmol/100g ; [Epox] = 102 mmol/100g ; Viscosité = 64 mPa.s.

**Additif K10 :**

Dans un tricol de 1 L sous azote, on introduit 188,9 g de toluène. Le milieu est placé sous agitation magnétique et chauffé à 85°C. Lorsque la température est atteinte, 0,6504 g de Pt/C est introduit. Puis, un mélange d'allyl glycidyl ether (AGE) (136,3 g, 1,19 mol) et de polyméthylhydrogénosiloxane **H4** (465,7 g, SiH = 2,77 mol) est ajouté goutte à goutte pendant 8 heures. Après retour à température ambiante, le milieu réactionnel est filtré, traité et filtré puis dévolatilisé à 25-30°C sous 0-3 mbar pendant 30 min puis à 90°C (consigne) sous 1 mbar pendant 2h pour conduire à une huile silicone fonctionnalisée composée de 18 motifs $(CH_3)_2SiO_{2/2}$, n motifs $YCH_3SiO_{2/2}$ , m motifs $HCH_3SiO_{2/2}$, et deux motifs $H(CH_3)_2Si_{1/2}$ avec les caractéristiques suivantes : n+m = 16 ; [SiH] = 347 mmol/100g ; [Epox] = 171,2 mmol/100g ; Viscosité = 90,4 mPa.s.

**Additif K11** :

Dans un tricol de 1 L sous azote, on introduit 104,0 g de toluène. Le milieu est placé sous agitation magnétique et chauffé à 80°C. Lorsque la température est atteinte, 887 mg de Pt/C est introduit. Puis, un mélange d'allyl glycidyl ether (AGE) (171,5 g, 1,50 mol) et de polyméthylhydrogénosiloxane **H5** comprenant 27 motifs $(CH_3)HSiO_{2/2}$, 7 motifs $(CH_3)_2SiO_{2/2}$ et deux motifs terminaux $(CH_3)_2HSiO_{1/2}$ (250,0 g, SiH = 3,16 mol) est ajouté goutte à goutte pendant 6 heures. Après retour à température ambiante, le milieu réactionnel est filtré puis dévolatilisé à 25-30°C sous 0-3 mbar pendant 30 min puis à 90°C (consigne) sous 1 mbar pendant 1h pour conduire à une huile silicone fonctionnalisée composée de 7 motifs $(CH_3)_2SiO_{2/2}$, n motifs $YCH_3SiO_{2/2}$, m motifs $HCH_3SiO_{2/2}$, et deux motifs $H(CH_3)_2Si_{1/2}$ avec les caractéristiques suivantes : n+m = 27 ; [SiH] = 517 mmol/100g ; [Epox] = 293 mmol/100g ; Viscosité = 140 mPa.s.

Le tableau 1 ci-après détaille les différents organopolysiloxanes linéaires synthétisés **K1** à K11.

Tableau 1 : Organopolysiloxanes linéaires synthétisés **K1** à **K11.**

| Additif | **K1** | **K2** | **K3** | **K4** | **K5** | **K6** | **K7** | **K8** | **K9** | **K10** | **K11** |
|---|---|---|---|---|---|---|---|---|---|---|---|
| Nombre total de motifs siloxyles | 11 | 11 | 22 | 22 | 22 | 22 | 22 | 22 | 36 | 36 | 36 |
| Nombre motifs $(CH_3)_2SiO_{2/2}$ | 0 | 0 | 0 | 0 | 0 | 0 | 0 | 0 | 18 | 18 | 7 |
| **[epoxy] mmol/100g** | 291 | 347 | 38 | 198 | 190 | 324 | 381 | 537 | 102 | 171 | 293 |
| **[SiH] mmol/100g** | 586 | 433 | 1300 | 892 | 999 | 568 | 377 | 0 | 519 | 347 | 517 |
| **[SiH]/[epoxy]** | 2,2 | 1,2 | 34,2 | 4,5 | 5,3 | 1,8 | 1 | 0 | 5,1 | 2 | 1,8 |

3) Préparation des supports fibreux enduits

a) Préparation d'une composition à partir d'un précurseur bicomposant:
Les compositions sont obtenues par mélange, à température ambiante, de 100 parties en poids d'une partie A et de 10 parties en poids d'une partie B d'un système bicomposant (voir compositions dans le tableau 2)
b) le mélange est enduit avec un poids déposé d'environ 30 à 36 g/$m^2$ de support fibreux pour former une couche à l'aide de râcles ou de cylindres sur le tissu au choix, et
c) la couche résultante est réticulée pendant 60 secondes à 190° C dans un four MATHIS pour obtenir un élastomère.

4) Tests réalisés sur les tissus enduits

Les différents tissus enduits sont soumis au test « scrub » détaillé ci-dessous pour mesurer la performances d'adhésion de l'élastomère silicone sur les différents tissus.

Le test de résistance au froissement et à l'abrasion appelé test "scrub" caractérise la bonne adhésion de l'élastomère silicone sur le support fibreux. Il est mis en œuvre selon la norme EN ISO 5981- Méthode A. Ce test consiste à soumettre une éprouvettes de support textile revêtu de dimension 50mm*100 mm d'une part, à un mouvement de cisaillement à l'aide de deux mâchoires pinçant les deux bords opposés de l'éprouvette et animées d'un mouvement alternatif l'une par rapport à l'autre et, d'autre part, à une abrasion par contact avec un support mobile ou patin qui applique une force sur l'éprouvette de 5N. Ce test est réalisée soit 24 heures après l'enduction soit après viellissement accélérée pendant 7 jours à 80°C et 95% d'humidité relative. Après 500 froissements, le tissu enduit est vérifié. Si le revêtement n'a pas été délaminé, la résistance à l'abrasion est satisfaisante et on réalise de nouveau 500 froissements

avant de vérifier l'état du tissu. Le test est finalisé lorsque l'état du tissu revêtu n'est pas satisfaisant.

Les compositions silicones détaillées dans le tableau 2 suivant ont été évaluées comme compostions d'enduction de tissus airbag.

Tableau 2 : Recherche d'un système promoteur adhésion amélioré

| **Composition** | C1 Brevet EP0681014 | C2 Comparatif | I1 Invention | I2 Invention | C3 Comparatif | C4 Comparatif |
|---|---|---|---|---|---|---|
| **Partie A (parties en poids)** | | | | | | |
| Huile vinylée E1 | 52,7 | 52,7 | 52,7 | 50,7 | 49,7 | 48,0 |
| Organohydrogéno polysiloxane H1 | 5,8 | 0,0 | 0,0 | 0,0 | 5,8 | 5,8 |
| Résine F1 | 20,0 | 21,1 | 21,1 | 21,1 | 20,0 | 20,0 |
| ECH | 0,025 | 0,025 | 0,025 | 0,025 | 0,025 | 0,025 |
| Carbonate de calcium J1 | 18,5 | 18,5 | 18,5 | 18,5 | 18,5 | 18,5 |
| | | | | | | |
| **Promoteurs adhésion** | | | 0,0 | | | |
| VTMO | 1,0 | | | | | |
| GLYMO | 2,0 | | | 2,0 | 6,0 | 7,7 |
| Additif K1 | | 7,7 | 7,7 | 7,7 | 0,0 | 0,0 |
| TOTAL | 100 | 100 | 100 | 100 | 100 | 100 |
| **Partie B (parties en poids)** | | | | | | |
| Huile vinylée E1 | 8,28 | 9,48 | 8,68 | 8,68 | 8,68 | 8,68 |
| Base colorante | 0,9 | 0,5 | 0,5 | 0,5 | 0,5 | 0,5 |
| TBOT | 0,8 | 0 | 0,8 | 0,8 | 0,8 | 0,8 |
| Catalyseur C | 0,02 | 0,02 | 0,02 | 0,02 | 0,02 | 0,02 |
| TOTAL | 10 | 10 | 10 | 10 | 10 | 10 |
| | | | | | | |
| **H/Vi composition** | 2,4 | 4 | 4 | 4,3 | 4 | 4 |
| **[epoxy] composition en mmol/100g** | 7,13 | 22,2 | 20,9 | 27,5 | 21,4 | 27,5 |
| **[SiH] composition en mmol/100g** | 36,4 | 39,3 | 39,3 | 41 | 36,4 | 36,4 |

On mélange 100 parties en poids de partie A et 10 parties en poids de partie B pour obtenir les compositions d'enduction. Ces compositions ont été enduites puis réticulées sur deux types de tissu polyester : un tissu polyester lavé et thermofixé et un tissu polyester loomstate non thermofixé. Les résultats au test scrub pour évaluer l'adhésion et la résistance à l'abrasion du revêtement silicone sont présentés dans le tableau 3 suivant.

Tableau 3 :Tests de résistance à l'abrasion sur tissus polyester après enduction et réticulation

| **Compositions** | **C1** | **C2** | **I1** | **I2** | **C3** | **C4** |
|---|---|---|---|---|---|---|
| **Résultats test scrub- Tissu Polyester lavé et thermofixé** | | | | | | |
| Après 24h | 500 | 1500 | 1000 | 1500 | 500 | 500 |
| Après 7j/80°C, 95%HR | 1000 | 1000 | 1000 | 1000 | 0 | 500 |

(suite)

| Résultats test scrub- Tissu Polyester Loomstate | | | | | | |
|---|---|---|---|---|---|---|
| Après 24h | 500 | 0 | 500 | 500 | 0 | 0 |
| Après 7j/80°C, 95%HR | 0 | 500 | 1000 | 1000 | 0 | 0 |

Le tissu en PET enduit avec une composition I1 selon l'invention comprenant comme promoteur d'adhésion l'organopolysiloxane K1 fonctionnalisé SiH et Si epoxy et du titanate de butyle présente une très bonne résistance à l'abrasion après 24 h et après vieillissement à 80°C et sous 95% d'humidité relative pendant 7 jours. Ceci se vérifie sur un tissu PET lavé et thermofixé et également sur un tissu en PET loomstate non lavé ni thermofixé. En absence de titanate de butyle (composition C2), l'adhésion obtenue après 24h sur du PET loomstate n'est pas satisfaisante.

Les exemples comparatifs C3 et C4 montrent que lorsque la même concentration en motifs époxy et SiH dans la composition silicone est obtenue en utilisant comme promoteur d'adhésion du glycidoxypropyltriméthoxysilane (GLYMO) et du TBOT et une huile SiH réticulante sans motifs epoxy, la résistance à l'abrasion du tissu enduit PET thermofixé ou loomstate n'est pas satisfaisante.

A titre comparatif, la composition C1 selon l'art antérieur EP0681014 comprenant comme promoteurs d'adhésion du GLYMO, du VTMO et du TBOT ne permet pas d'obtenir une bonne résistance à l'abrasion après vieillissement humide lorsque le tissu enduit est du PET loomstate.

L'additif K1 comprenant des motifs SiH et Si-époxy et jouant le rôle de promoteur d'adhésion et de réticulant permet d'obtenir une meilleure adhésion du revêtement silicone sur le PET.

Les organopolysiloxanes K2 à K11 ont été été testés comme promoteurs d'adhésion en remplacement de K1 dans une composition silicone comme celle de **I1** détaillée dans le tableau 2. La quantité de promoteur d'ahésion K2 à K11 est ajustée pour avoir une concentration en fonctions époxy dans la composition silicone comprise entre 20 et 22 mmol/100g et maintenir le ratio molaire des motifs Si-H sur les motifs SiVi de la composition (ratio H/Vi) compris entre 2 et 5 ce qui est optimal pour cette application. Par conséquent quand le promoteur d'adhésion a peu de motifs SiH et beaucoup de motifs époxy, un ajout d' rganohydrogénopolysiloxane H1 réticulant est réalisée pour maintenir constante la concentration en SiH dans le réseau. C'est le cas des compositions C1, C8 et I5. En revanche, lorsque le promoteur d'adhésion testé a beaucoup de motifs SiH, pour maintenir le ratio H/Vi inférieur à 5, la concentration en époxy dans la composition silicone est inférieure à 20 mmol/100g de composition silicone. Les concentrations en motifs SiH, en motifs époxy et le ratio H/Vi des compositions silicones d'enduction est détaillée dans le tableau 4 suivant.

Tableau 4 : Compositions silicone d'enduction.

| **Essai** | **C2** | **I1** | **I3** | **C5** | **C6** | **C7** | **I4** | **I5** | **C8** | **C9** | **C10** | **C11** |
|---|---|---|---|---|---|---|---|---|---|---|---|---|
| **Additif** | **Glymo** | **K1** | **K2** | **K3** | **K4** | **K5** | **K6** | **K7** | **K8** | **K9** | **K10** | **K11** |
| **[epoxy] composition en mmol/100g** | 21,4 | 20,9 | 24,3 | 1,5 | 9 | 7,1 | 22,2 | 22,2 | 22 | 7,7 | 18,8 | 22 |
| **[SiH] composition en mmol/100g** | 36,4 | 39,3 | 30,3 | 59,8 | 38,9 | 37,6 | 38,9 | 38 | 36,4 | 38,9 | 38,2 | 39 |
| **Ajout organohydrogénopolysiloxane H1** | oui | | | | | | | oui | oui | | | |
| **H/Vi** | | 4,3 | 4,4 | 3,5 | 4,2 | 4,1 | 4,3 | 4,2 | 4,0 | 4,3 | 4,2 | 4,3 |

Ces compositions ont été enduites puis réticulées sur des tissus en polyester ou en polyamide ou sur les deux. Les résultats sont présentés dans les tableaux 5 et 6 suivants.

Le tableau 5 présente les résultats test scrub pour évaluer l'adhésion et la résistance à l'abrasion du revêtement silicone sur deux types de tissu polyester : un tissu polyester lavé thermofixé et un tissu polyester loomstate non thermofixé

Tableau 5:Tests de résistance à l'abrasion sur tissus polyester après enduction et réticulation

| **Essai** | **C2** | **I1** | **I3** | **C5** | **C6** | **C7** | **I4** | **C8** | **C9** | **C10** | **C11** |
|---|---|---|---|---|---|---|---|---|---|---|---|
| **Additifs** | | **K1** | **K2** | **K3** | **K4** | **K5** | **K6** | **K8** | **K9** | **K10** | **K11** |
| **Résultats test scrub- Tissu Polyester lavé et thermofixé** | | | | | | | | | | | |
| Après 24h | 500 | 500 | 500 | 0 | 1000 | 500 | 1500 | 500 | 0 | 500 | 500 |
| Après 7j/80°C, 95%HR | 0 | 1500 | 1000 | 0 | 0 | 0 | 1500 | 500 | 0 | 0 | 1000 |
| **Résultats test scrub- Tissu Polyester Loomstate** | | | | | | | | | | | |
| Après 24h | 0 | 500 | 500 | 0 | 0 | 0 | 500 | 0 | 0 | 0 | 0 |
| Après 7j/80°C, 95%HR | 0 | 1000 | 1000 | 0 | 0 | 0 | 1000 | 0 | 0 | 0 | 0 |

Les compositions silicone C5, C6, C7 et C9 comprenant des promoteurs d'ahésion avec un ratio de motifs SiH/époxy ≥ 4 qui conduisent à une composition silicone avec moins de 10 mmoles de motifs époxy par 100g de composition, ne présentent pas une résistance à l'abrasion suffisante.

Les compositions silicone C10 et C11 comprenant des promoteurs d'ahésion comprenant des motifs D non fonctionnalisés $Si(CH_3)_2O_{2/2}$, malgré un ratio de motifs SiH/époxy <4, et une concentration en motifs SiH et époxy dans la composition comparables à celles de I1 présentent une mauvaise résistance à l'abrasion sur tissu polyester loomstate.

La composition C8 comprenant un promoteurs d'ahésion K8 comprenant uniquement des motifs époxy et une concentration en motifs SiH et époxy dans la composition comparables à celles de I1 par l'ajout d'organohydropolysiloxane réticulant H1 ne conduit pas non plus à une bonne résistance à l'abrasion. L'additif X comprenant des motifs SiH et Si-époxy et jouant le rôle de promoteur d'adhésion et de réticulant est par conséquent indispensable pour améliorer l'adhésion.

Le tableau 6 présente les résultats test scrub pour évaluer l'adhésion et la résistance à l'abrasion du revêtement silicone sur deux types de tissu polyamide : un tissu polyamide lave thermofixé et un tissu polyamide loomstate non thermofixé.

Tableau 6:Tests de résistance à l'abrasion sur tissus polyamide après enduction et réticulation.

| **Essai** | **I1** | **C6** | **C7** | **I5** | **C6** | **C7** | **C8** | **C9** |
|---|---|---|---|---|---|---|---|---|
| **Additifs** | **K1** | **K4** | **K5** | **K7** | **K8** | **K9** | **K10** | **K11** |
| **Résultats test scrub- Tissu Polyamide lavé et thermofixé** | | | | | | | | |
| Après 24h | 1000 | 0 | 1000 | 1500 | 0 | | 0 | 500 |
| Après 7j/80°C, 95%HR | 2500 | 0 | 2500 | 4000 | 1500 | 0 | 500 | 500 |
| **Résultats test scrub- Tissu Polyamide loomstate** | | | | | | | | |
| Après 24h | 1000 | 0 | 0 | 500 | 0 | 0 | 0 | 0 |
| Après 7j/80°C, 95%HR | 1000 | 0 | 0 | 5500 | 0 | 0 | 0 | 0 |

Il a été vérifié qu'après enduction et réticulation des compositions selon l'invention, les tissus enduits atteignent les valeurs de résistance au peignage et à la déchirure conformes à ce qui est nécessaire pour l'application airbag.

## Revendications

1. Composition silicone **A** comprenant une base silicone **B** susceptible de réticuler ou durcir par polyaddition et **caractérisée en ce qu'**elle comprend un système promoteur d'adhésion **D** comprenant au moins un composé organique du titane **M** et au moins un additif **X** qui est un organopolysiloxane linéaire comprenant des motifs siloxyles **(I.1)** à **(I.3)** de formules suivantes:

-

$$Y_aZ^1_bSiO_{\frac{4-(a+b)}{2}} \quad \textbf{(I.1)}$$

-

$$Z^2_3SiO_{\frac{1}{2}} \quad \textbf{(I.2)}$$

-

$$H_dZ^3_eSiO_{\frac{4-(d+e)}{2}} \quad \textbf{(I.3)}$$

et ne comprenant pas de motifs de formule (I.4):

-

$$Z^2_2SiO_{\frac{2}{2}} \quad \textbf{(I.4)}$$

dans lesquelles

- a=1 et b=1 ou 2
- d=1 et e=1 ou 2
- le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi les radicaux constitués par le groupe : alkylglycidyléther, époxyalkyle linéaire, ramifié ou cyclique, époxyalcényle linéaire, ramifié ou cyclique et glycidyl-ester d'acide carboxylique,
- les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, xylyle, tolyle et phényle,

avec la condition selon laquelle l'additif **X** comprend, par molécule, au moins deux motifs siloxyles **(I.1)** porteurs de groupes hydrocarbonés époxyfonctionnels et au moins trois motifs siloxyles **(I.3)** porteurs de groupes hydrogénosiloxyles.

**2.** Composition silicone **A** selon la revendication 1 dans laquelle l'additif **X** a un nombre total de motifs siloxyles compris entre 7 et 30.

**3.** Composition silicone **A** selon la revendication 1 dans laquelle l'additif **X** ne contient pas de groupes fonctionnels alkoxy, vinyl, hydroxy ou méthacryloxy.

**4.** Composition silicone **A** selon l'une quelconque des revendications 1 à 3 dans laquelle l'additif **X** a un ratio molaire entre les motifs siloxyles **(I.1)** et les motifs siloxyles **(I.3)** compris entre 0,5 et 4, de préférence compris entre 0,8 et 3 et encore plus préférentiellement compris entre 0,8 et 2,5.

**5.** Composition silicone **A** selon la revendication 1 dans laquelle le système promoteur d'adhésion **D** comprend en outre un organosilane **G** comprenant au moins un radical époxy.

**6.** Composition silicone **A** selon la revendication 1 dans laquelle la concentration en motifs époxy est comprise entre

10 et 60 mmol pour 100g de composition **A** et de préférence comprise entre 15 et 40 mmol pour 100g de composition **A.**

**7.** Composition silicone **A** selon la revendication 1 dans laquelle la base silicone **B** comprend

- au moins un organopolysiloxane **E** présentant, par molécule, au moins deux groupes alcényles en $C_2$-$C_{12}$ liés chacun à un atome de silicium différent,
- au moins une résine organopolysiloxane **F** comprenant de 0,1 à 20% en poids de groupes alcényles en $C_2$-$C_6$ liés liés chacun à un atome de silicium différent,
- éventuellement au moins un organohydrogénopolysiloxane **H** présentant, par molécule, au moins deux atomes d'hydrogène liés chacun à un atome de silicium différent, et de préférence au moins trois atomes d'hydrogène liés chacun à un atome de silicium différent,
- une quantité efficace d'un catalyseur **C** de polyaddition qui est un métal ou composé métallique du groupe du platine,
- au moins un inhibiteur **I,** et
- éventuellement au moins une charge **J.**

**8.** Système bicomposant précurseur de la composition **A** telle que définie selon la revendication 7 se présentant en deux parties **A1** et **A2** distinctes destinées à être mélangées pour former la composition **A**, **caractérisé en ce que** l'une de ces parties contient le catalyseur **C** tandis que l'autre partie contient l'additif **X** et l'organohydrogénopolysiloxane **H**.

**9.** Elastomère silicone susceptible d'être obtenu par réticulation et/ou durcissement de la composition silicone **A** telle que définie selon l'une quelconques des revendications 1 à 7.

**10.** Procédé pour préparer un support fibreux enduit par un élastomère silicone comprenant les étapes suivantes :

a) la préparation d'une composition silicone **A** telle que définie selon l'une quelconque des revendications 1 à 7,
b) l'application d'au moins 10 g/$m^2$ sur une ou deux faces d'un support fibreux de la composition silicone **A** préparée à l'étape a), et
c) la réticulation du dépôt formé à l'étape b) pour former un élastomère par chauffage à une température pouvant atteindre 210°C, par exemple par action d'un rayonnement électromagnétique ou d'un air chaud.

**11.** Procédé selon la revendication 10 dans lequel le support fibreux est en polyamide ou en polyester.

**12.** Procédé selon la revendication 10 **caractérisé en ce que** le support fibreux n'a pas subi une étape de lavage après tissage.

**13.** Procédé selon la revendication 10 **caractérisé en ce que** le support fibreux n'a pas subi une étape de traitement thermique après tissage.

**14.** Support fibreux enduit par un élastomère silicone susceptible d'être obtenu par le procédé défini selon l'une quelconque des revendications 10 à 13.

**15.** Sacs gonflables de sécurité comprenant un élastomère silicone tel que défini selon la revendication 9 ou un support fibreux tel que défini selon la revendication 14.

**16.** Utilisation de la composition silicone **A** définie selon l'une quelconque des revendications 1 à 7 pour l'enduction de support fibreux tissé, tricoté, ou non tissé.

**17.** Utilisation de la composition silicone **A** définie selon l'une quelconque des revendications 1 à 7 pour l'enduction de sac gonflable destiné à la protection d'un passager dans un véhicule.

## Patentansprüche

**1.** Silikonzusammensetzung **A,** umfassend eine Silikonbasis **B,** die durch Polyaddition vernetzt oder gehärtet werden kann, **dadurch gekennzeichnet, dass** sie mindestens ein Haftvermittlersystem **D** umfasst, das mindestens eine

organische Titanverbindung **M** und mindestens ein Additiv **X** umfasst, bei welchem es sich um ein lineares Organopolysiloxan handelt, das Siloxyleinheiten **(I.1)** bis (**I.3**) mit den folgenden Formeln:

-

$$Y_a Z^1_b SiO_{\frac{4-(a+b)}{2}} \quad (I.1)$$

-

$$Z^2_3 SiO_{\frac{1}{2}} \quad (I.2)$$

-

$$H_d Z^3_e SiO_{\frac{4-(d+e)}{2}} \quad (I.3)$$

umfasst und keine Einheiten der Formel (I.4)

-

$$Z^2_2 SiO_{\frac{2}{2}} \quad (I.4)$$

umfasst,
in denen:

- a = 1 und b = 1 oder 2,
- d = 1 und e = 1 oder 2,
- das Symbol Y für einen Rest mit einer Kohlenwasserstoffgruppe mit 2 bis 20 Kohlenstoffatomen und einer Epoxidfunktion und gegebenenfalls einem oder mehreren Heteroatomen wie einem Sauerstoffatom steht, vorzugsweise das Symbol Y aus den Resten bestehend aus der Gruppe Alkylglycidylether, lineares, verzweigtes oder cyclisches Epoxyalkyl, lineares, verzweigtes oder cyclisches Epoxyalkenyl und Carbonsäureglycidylester ausgewählt ist;
- die Symbole $Z^1$, $Z^2$ und $Z^3$ gleich oder verschieden sind und für eine einwertige Kohlenwasserstoffgruppe mit 1 bis 30 Kohlenstoffatomen stehen und vorzugsweise aus der Gruppe bestehend aus Alkylgruppen mit 1 bis 8 Kohlenstoffatomen und Arylgruppen mit 6 bis 12 Kohlenstoffatomen ausgewählt sind und noch weiter bevorzugt aus der Gruppe bestehend aus einer Methyl-, Ethyl-, Propyl-, Xylyl-, Tolyl- und Phenylgruppe ausgewählt sind,

mit der Maßgabe, dass das Additiv **X** pro Molekül mindestens zwei Siloxyleinheiten **(I.1)** mit epoxidfunktionellen Kohlenwasserstoffgruppen und mindestens drei Siloxyleinheiten (**I.3**) mit Hydrogensiloxylgruppen umfasst.

**2.** Silikonzusammensetzung **A** nach Anspruch 1, **dadurch gekennzeichnet, dass** das Additiv **X** eine Gesamtzahl von Siloxyleinheiten zwischen 7 und 30 aufweist.

**3.** Silikonzusammensetzung **A** nach Anspruch 1, **dadurch gekennzeichnet, dass** das Additiv **X** keine Alkoxy-, Vinyl-, Hydroxy- oder Methacryloxyfunktionen aufweist.

4. Silikonzusammensetzung **A** nach einem der Ansprüche 1 bis 3, wobei das Additiv **X** ein Molverhältnis zwischen den Siloxyleinheiten **(I.1)** und den Siloxyleinheiten (**I.3**) zwischen 0,5 und 4, vorzugsweise zwischen 0,8 und 3 noch weiter bevorzugt zwischen 0,8 und 2,5 aufweist.

5. Silikonzusammensetzung **A** nach Anspruch 1, wobei das Haftvermittlersystem **D** außerdem ein Organosilan **G** mit mindestens einem Epoxidrest umfasst.

6. Silikonzusammensetzung **A** nach Anspruch 1, wobei die Konzentration von Epoxideinheiten zwischen 10 und 60 mmol pro 100 g Zusammensetzung **A** und vorzugsweise zwischen 15 und 40 mmol pro 100 g Zusammensetzung **A** liegt.

7. Silikonzusammensetzung **A** nach Anspruch 1, wobei die Silikonbasis **B** Folgendes umfasst:

- mindestens ein Organopolysiloxan **E,** das pro Molekül mindestens zwei $C_2$-$C_{12}$-Alkenylgruppen, die jeweils an ein anderes Siliciumatom gebunden sind, aufweist,
- mindestens ein Organopolysiloxanharz **F,** das 0,1 bis 20 Gew.-% $C_2$-$C_6$-Alkenylgruppen, die jeweils an ein anderes Siliciumatom gebunden sind, umfasst,
- gegebenenfalls mindestens ein Organohydrogenpolysiloxan **H,** das pro Molekül zwei Wasserstoffatome, die jeweils an ein anderes Siliciumatom gebunden sind, und vorzugsweise mindestens drei Wasserstoffatome, die jeweils an ein anderes Siliciumatom gebunden sind, aufweise,
- eine wirksame Menge eines Polyadditionskatalysators **C,** bei dem es sich um ein Metall oder eine Metallverbindung aus der Platingruppe handelt,
- mindestens einen Inhibitor **I** und
- gegebenenfalls mindestens einen Füllstoff **J**.

8. Zweikomponentiges Vorläufersystem für die Zusammensetzung **A** gemäß Anspruch 7, das in zwei verschiedenen Teilen **A1** und **A2,** die zum Mischen zur Bildung der Zusammensetzung **A** vorgesehen sind, vorliegt, **dadurch gekennzeichnet, dass** einer dieser Teile den Katalysator **C** enthält, während der andere Teil das Additiv **X** und das Organohydrogenpolysiloxan **H** enthält.

9. Silikonelastomer, das durch Vernetzung und/oder Härtung der Silikonzusammensetzung **A** gemäß einem der Ansprüche 1 bis 7 erhältlich ist.

10. Verfahren zur Herstellung eines mit einem Silikonelastomer beschichteten Faserträgers, das die folgenden Schritte umfasst:

a) Herstellen einer Silikonzusammensetzung **A** gemäß einem der Ansprüche 1 bis 7,
b) Aufbringen von mindestens 10 g/$m^2$ der in Schritt a) hergestellten Silikonzusammensetzung **A** auf eine oder beide Seiten eines Faserträgers und
c) Vernetzen der in Schritt b) gebildeten Ablagerung zur Bildung eines Elastomers durch Erhitzen auf eine Temperatur, die 210 °C erreichen kann, beispielsweise durch Einwirkung von elektromagnetischer Strahlung oder Heißluft.

11. Verfahren nach Anspruch 10, wobei der Faserträger aus Polyamid oder Polyester besteht.

12. Verfahren nach Anspruch 10, **dadurch gekennzeichnet, dass** der Faserträger nach dem Weben keinem Waschschritt unterworfen wurde.

13. Verfahren nach Anspruch 10, **dadurch gekennzeichnet, dass** der Faserträger nach dem Weben keinem Wärmebehandlungsschritt unterworfen wurde.

14. Faserträger, der mit einem durch das Verfahren gemäß einem der Ansprüche 10 bis 13 erhältlichen Silikonelastomer beschichtet ist.

15. Sicherheitsairbags, umfassend ein Silikonelastomer gemäß Anspruch 9 oder einen Faserträger gemäß Anspruch 14.

16. Verwendung der Silikonzusammensetzung A gemäß einem der Ansprüche 1 bis 7 zum Beschichten von gewebten, gestrickten oder vliesartigen Faserträgern.

**17.** Verwendung der Silikonzusammensetzung A gemäß einem der Ansprüche 1 bis 7 zum Beschichten von Airbags, die zum Schutz eines Passagiers in einem Fahrzeug bestimmt sind.

## Claims

**1.** Silicone composition **A** comprising a silicone base **B** capable of crosslinking or curing by polyaddition and **characterized in that** it comprises an adhesion promoter system **D** comprising at least one organic titanium compound M and at least one additive **X** which is a linear organopolysiloxane comprising siloxyl units **(I.1)** to (**I.3**) having the formulae below:

-

$$Y_a Z^1_b SiO_{\frac{4-(a+b)}{2}} \quad \text{(I.1)}$$

-

$$Z^2_3 SiO_{\frac{1}{2}} \quad \text{(I.2)}$$

-

$$H_d Z^3_e SiO_{\frac{4-(d+e)}{2}} \quad \text{(I.3)}$$

and not comprising units of formula (1.4):

-

$$Z^2_2 SiO_{\frac{2}{2}} \quad \text{(I.4)}$$

in which

- a=1 and b=1 or 2
- d=1 and e=1 or 2
- the symbol Y represents a radical comprising a hydrocarbon-based group having from 2 to 20 carbon atoms and an epoxy function, with optionally one or more heteroatoms such as an oxygen atom, preferably the symbol Y is chosen from the radicals consisting of the group: alkyl glycidyl ether, linear, branched or cyclic epoxyalkyl, linear, branched or cyclic epoxyalkenyl and carboxylic acid glycidyl ester,
- the symbols $Z^1$, $Z^2$ and $Z^3$, which may be identical or different, represent a monovalent hydrocarbon-based group having from 1 to 30 carbon atoms, preferably chosen from the group formed by alkyl groups having from 1 to 8 carbon atoms and aryl groups having from 6 to 12 carbon atoms, and even more preferentially chosen from the group consisting of a methyl, ethyl, propyl, xylyl, tolyl and phenyl group,

with the condition according to which the additive **X** comprises, per molecule, at least two siloxyl units (I.1) bearing epoxyfunctional hydrocarbon-based groups and at least three siloxyl units **(I.3)** bearing hydrosiloxyl groups.

**2.** Silicone composition **A** according to Claim 1, wherein the additive **X** has a total number of siloxyl units of between

7 and 30.

3. Silicone composition **A** according to Claim 1, wherein the additive **X** does not contain alkoxy, vinyl, hydroxyl or methacryloxy functional groups.

4. Silicone composition **A** according to any one of Claims 1 to 3, wherein the additive **X** has a molar ratio between the siloxyl units **(I.1)** and the siloxyl units **(I.3)** of between 0.5 and 4, preferably between 0.8 and 3 and even more preferentially between 0.8 and 2.5.

5. Silicone composition **A** according to Claim 1, wherein the adhesion promoter system **D** also comprises an organosilane **G** comprising at least one epoxy radical.

6. Silicone composition **A** according to Claim 1, wherein the concentration of epoxy units is between 10 and 60 mmol per 100 g of composition **A** and preferably between 15 and 40 mmol per 100 g of composition **A.**

7. Silicone composition **A** according to Claim 1, wherein the silicone base **B** comprises

- at least one organopolysiloxane **E** having, per molecule, at least two $C_2$-$C_{12}$ alkenyl groups each bonded to a different silicon atom,
- at least one organopolysiloxane resin **F** comprising from 0.1% to 20% by weight of $C_2$-$C_6$ alkenyl groups each bonded to a different silicon atom,
- optionally at least one organohydropolysiloxane **H** having, per molecule, at least two hydrogen atoms each bonded to a different silicon atom, and preferably at least three hydrogen atoms each bonded to a different silicon atom,
- an effective amount of a polyaddition catalyst **c** which is a metal or metal compound of the platinum group,
- at least one inhibitor **I,** and
- optionally at least one filler **J.**

8. Two-component precursor system for the composition **A** as defined in Claim 7 which is in two distinct parts **A1** and **A2** intended to be mixed so as to form the composition **A, characterized in that** one of these parts contains the catalyst **C** while the other part contains the additive **X** and the organohydropolysiloxane **H.**

9. Silicone elastomer that can be obtained by crosslinking and/or curing the silicone composition **A** as defined in any one of Claims 1 to 7.

10. Process for preparing a fibrous support coated with a silicone elastomer, comprising the following steps:

a) preparing a silicone composition **A** as defined in any one of Claims 1 to 7,
b) applying onto one or two faces of a fibrous support at least 10 g/$m^2$ of the silicone composition **A** prepared in step a), and
c) crosslinking the deposit formed in step b) so as to form an elastomer by heating at a temperature that can reach 210°C, for example through the action of electromagnetic radiation or hot air.

11. Process according to Claim 10, wherein the fibrous support is made of polyamide or of polyester.

12. Process according to Claim 10, **characterized in that** the fibrous support has not undergone a washing step after weaving.

13. Process according to Claim 10, **characterized in that** the fibrous support has not undergone a heat-treatment step after weaving.

14. Fibrous support coated with a silicone elastomer that can be obtained by means of the process as defined in any one of Claims 10 to 13.

15. Airbags comprising a silicone elastomer as defined in Claim 9 or a fibrous support as defined in Claim 14,

16. Use of the silicone composition **A** as defined in any one of Claims 1 to 7, for coating a woven, knitted or nonwoven fibrous support.

17. Use of the silicone composition **A** as defined in any one of Claims 1 to 7, for coating an airbag intended for the protection of a passenger in a vehicle.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 617881 A
- WO 2007065885 A
- US 5877256 A
- US 5789084 A
- EP 0681014 A
- EP 1623063 A
- US 7153583 B
- US 7581568 B
- EP 0904315 A
- EP 1309647 A
- US 26761820 A
- US 3159601 A
- US 3159602 A
- US 3220972 A
- EP 0057459 A
- EP 0188978 A
- EP 0190530 A
- US 3419593 A
- US 3775452 A
- US 5516938 A